# EUROPEAN PATENT APPLICATION

(11) **EP 1 408 437 A1**
(43) Date of publication of application: **14.04.2004**
(21) Application number: 02746043.5
(22) Date of filing: 15.07.2002
(51) Int. Cl.: G06F 17/60

(54) **PRODUCT CHECK SYSTEM AND PRODUCT CHECK METHOD**

(30) Priority: 17.07.2001 JP 2001216342; 17.07.2001 JP 2001216344; 05.10.2001 JP 2001309589; 26.10.2001 JP 2001328811
(71) Applicant: MATSUSHITA ELECTRIC INDUSTRIAL CO., LTD., Kadoma-shi, Osaka 571-8501 (JP)
(72) Inventor: UENO, Takayoshi, Hirakata-shi, Osaka 573-1146 (JP); ONISHI, Hiroshi, Hirakata-shi, Osaka 573-1125 (JP); OKADA, Yuka, Kobe-shi, Hyogo 657-0036 (JP); SHIBAIKE, Narito, Setagaya-ku, Tokyo 156-0016 (JP); NAGANUMA, Hitoshi, Katano-shi, Osaka 573-0032 (JP); KAWAKAMI, Tetsuji, Katano-shi, Osaka 576-0015 (JP)
(74) Representative: Grünecker, Kinkeldey, Stockmair & Schwanhäusser Anwaltssozietät
(86) International application number: PCT/JP2002/007150
(87) International publication number: WO 2003/009194

(57) **Abstract**

A survey burden is reduced on a material manufacturer side, while survey items are easily changed on a material purchaser side.

A product survey system comprising: a survey target substance master 11 which stores product substance information including at least product specification information for specifying a predetermined product, the names of substances contained in said products, and the contents of said substances; inputting means 3 which inputs said product substance information; and substance code extracting means 5 which, on the basis of the setting of said product specification information of a product and the name of a substance which serve as survey targets, searches said product specification information of said product and the name of a substance which serve as survey targets, from said product substance information database.

## Description

### TECHNICAL FIELD

The present invention relates to a product survey system and the like for surveying products manufactured from substances, including primary products such as raw materials, intermediate products such as parts and components processed from the raw materials, and end products manufactured from the primary products and the intermediate products, and thereby surveying the substances contained in the products and the environmental burden of the products.

### BACKGROUND ART

Recently, an increasing number of companies are positively promoting environmental preservation activities, and hence the manufacturing of products with environmental consideration has been desired. The manufacturing of products with environmental consideration requires that the materials used in the product fabrication are those with environmental consideration. In such a movement, green procurement activities in which materials with environmental consideration are positively procured are increasing. In green procurement, the degree of environmental consideration is evaluated for the materials to be procured, whereby materials having smaller environmental burden are selected and thereby positively procured.

Conventionally, such green procurement is promoted as follows: A material purchasing company makes a request to a manufacturing company for the survey of the degree of environmental consideration of the material, and then the manufacturing company discloses the survey result to the material purchasing company. In the survey of the material, the subject matter of the request to the manufacturing company for the survey depend on the survey items prescribed independently by each material purchasing company. Inparticular, in the survey of contained chemical substances, in the material, each material purchasing company specifies distinct target chemical substances.

However, the manufacturing company disclosing the survey result supplies the same type of components to a plurality of material purchasing companies in many cases. In such cases, when the material purchasing companies require distinct survey items for the same type of components, the manufacturing company needs to prepare reports having distinct subject matter of evaluation for the same survey result depending on each material purchasing company. This has caused the problem of an increase in the labor of the survey of the manufacturing company. Further, there has been a first problem as follows: Since the material purchasing company changes the survey items depending on the change in legislative regulations and social situations, such changes in survey items cause a notable increase in the labor because the requests for survey are made for a large number of materials.

Further, with an increase in the number and the types of survey target materials to be under material survey, and with an increase in the number and the types of survey target substances, in the material manufacturing company carrying out the survey, the case that persons having no specialized knowledge on chemical substances take charge of the survey has been increasing. This takes much labor for inputting of survey data, and tends to cause imperfection such as missing inputs and description errors. This has caused a difficulty in the accuracy management of the survey result. Similarly, in the material purchasing company receiving the survey result, the cases that persons having no specialized knowledge on chemical substances take charge of receiving the survey result has been increasing. This has caused a second problem of difficulty in checking imperfection in the received survey result. Further, a third problem has been caused that in making the request for material survey, a labor is necessary in determining the substances to be surveyed, and that imperfection such as a determination error tends to occur frequently.

### DISCLOSURE OF INVENTION

In order to resolve the above-mentioned first problem, an object of the invention is to provide a product survey system and the like which reduce the labor in the survey in the manufacturing company and which can allow to change survey items easily for the material purchasing company.

In order to resolve the above-mentioned second and third problems, an object of the invention is to provide an information-setting check apparatus, a product relevant information providing apparatus, a product survey support apparatus, and the like for supporting material survey so that even a person having no specialized knowledge on chemical substances can carry out accurate input and the identification of target substances.

To achieve the above object, a first invention of the present invention is a product survey system comprising:
a product substance information database which stores product substance information including at least product specification information for specifying a predetermined product, the names of substances contained in said products , and the contents of said substances;
product substance information inputting means which inputs said product substance information to said product substance information database; and
searching means which, on the basis of a setting of said product specification information of a product and the name of a substance which serve as survey targets, searches said product specification information of said product and the name of a substance which serve as survey targets, from said product substance information database.

Further, a second invention of the present invention is the product survey system according to the first invention of the present invention, comprising survey target setting means of performing said setting.

Further, a third invention of the present invention is the product survey system according to the first or the second invention of the present invention, wherein:
said product includes a plurality of sub-products;
in said product substance information database, said product substance information is stored on a said-sub-product basis; and
said product substance information of said product is expressed as an aggregation result of said product substance information of said sub-products constituting the product.

Further, a fourth invention of the present invention is the product survey system according to the third invention of the present invention, wherein:
in said product substance information database, said product substance information is managed as product classifications on the basis of the type of said product; and
said survey target settingmeans performs said setting on a said-product-classification basis, while said searching means searches on a said-product-classification basis.

Further, a fifth invention of the present invention is the product survey system according to the fourth invention of the present invention, wherein:
a survey target exclusion substance relevant to predetermined said product classification is set; and
in the operation of said setting of said survey target setting means, a substance set as said survey target exclusion substance is discriminated from said survey targets, while the product substance information thereof is obtained.

Further, a sixth invention of the present invention is the product survey system according to the first or the second invention of the present invention, comprising:
disclosure condition setting means of setting a predetermined disclosure condition; and
restricted outputting means of restricting the subject matter of said search result on the basis of said disclosure condition, and outputting it to the outside.

Further, a seventh invention of the present invention is the product survey system according to the sixth invention of the present invention, wherein:
said disclosure condition relates to a provider who provides said product substance information; and
said restricted outputting means performs said restriction on the basis of a permission of said provider.

Further, an eighth invention of the present invention is the product survey system according to the s ixth invention of the present invention, wherein:
said disclosure condition relates to the usage charge of said survey target setting means;
said restricted outputting means performs said restriction on the basis of the level of said charge.

Further, a ninth invention of the present invention is the product survey system according to the first or the second invention of the present invention, wherein a product substance information setting means comprising input supporting means which, on receiving an input of a part of characters of the name of said substance, displays a substance name list including said characters, and which receives selectively an input of a specific substance name within said displayed substance name list.

Further, a tenth invention of the present invention is the product survey system according to the first invention of the present invention, wherein said product substance information is managed using a substance code assigned to the name of the substance of said substances specification information.

Further, an eleventh invention of the present invention is the product survey system according to any one of the first to the ninth inventions of the present invention, comprising environmental burden evaluating means which, on the basis of said product substance information of said product serving as a survey target, evaluates the environmental burden of a desired product serving as said survey target.

Further, a twelfth invention of the present invention is an information-setting check apparatus comprising:
product substance information setting means which sets product substance information including at least product specification information for specifying a predetermined product and the names of substances contained in said products;
a relevant substance information database which stores substances relevance information including at least the names of products and/or substances highly relevant to each other based on a predetermined criterion;
checking means which, with referring to said relevant substance information database, checks whether a relevant substance related by said substances relevance information is included in the product specification information or the substances of said product substance information set by said substance information setting means; and
outputting means which, when said correspondence is found, outputs relevant substance information including at least the name of said relevant substance.

Further, a thirteenth invention of the present invention is the information-setting check apparatus according to the twelfth invention of the present invention, wherein said product substance information includes the content of said substance.

Further, a fourteenth invention of the present invention is the information-setting check apparatus according to the twelfth or the thirteenth invention, wherein when the name of said relevant substance is not included in said product substance information, said outputting means outputs said substances relevance information.

Further, a fifteenth invention of the present invention is the information-setting check apparatus according to the twelfth or the thirteenth invention of the present invention, wherein said substances relevance information includes the names of use relevant to the substances of said product substance information.

Further, a sixteenth invention of the present invention is the information-setting check apparatus according to the twelfth invention or the thirteenth invention of the present inveniton, wherein said predetermined criterion is defined on the basis of the relevance with said predetermined product.

Further, a seventeenth invention of the present invention is the information-setting check apparatus according to the fifteenth invention of the present invention, wherein in the case that the content percentage of the substance of said product substance information relative to said product is not below a predetermined value, said outputting means outputs said substances relevance information.

Further, an eighteenth invention of the present invention is the information-setting check apparatus according to the twelfth or the thirteenth invention of the present invention, further comprising aggregating means of aggregating the number of said substances relevance information for each of said predetermined products, wherein
among said aggregated combinations, said outputting means outputs combinations having a number not below a predetermined number, as said relevant substance information.

Further, a nineteenth invention of the present invention is the information-setting check apparatus according to the twelfth or the thirteenth invention of the present invention, wherein said substances relevance information includes the content percentage range of said relevant substance in the substance of said product substance information.

Further, a twentieth invention of the present invention is the information-setting check apparatus according to the nineteenth invention of the present invention, further comprising judging means of judging whether a content percentage of said substance included in said substance information falls within said content percentage range of said substances relevance information, wherein
said outputting means outputs the judgment result of said judging means together with said substances relevance information.

Further, a twenty-first invention of the present invention is a product relevant substance information providing apparatus comprising:
a product-substance information database which stores product relevant substance information including respective product information of various products and product relevant substance information containing at last the names of product relevant substances selected from said product information of various products on the basis of a predetermined criterion;
inputtingmeans which receives an input of saidproduct information of a product serving as a survey target; and
searching means which searches said product relevant substance information corresponding to said product information inputted through said inputting means, from said product-substance information database.

Further, a twenty-second invention of the present invention is the product relevant substance information providing apparatus according to the twenty-first invention of the present invention, wherein said product-substance information database includes the content percentage range of said product relevant substance in said product, as content percentage information.

Further, a twenty-third invention of the present invention is a product survey support apparatus comprising:
the product relevant information providing apparatus according to the twenty-first or the twenty-second invention of the present invention;
survey sheet preparing means of preparing a predetermined survey sheet; and
outputting means of outputting at least said survey sheet; wherein
said survey sheet has subj ect matter that information including at least the content of a substance related to said product in said product is required.

Further, a twenty-fourth invention of the present invention is the product survey support apparatus according to the twenty-third invention, wherein said survey sheet includes the subject matter that at least the content of the substance of said product relevant substance information corresponding to said product information inputted through said inputting means is included.

Further, a twenty-fifth invention of the present invention is the product survey support apparatus according to the twenty-third invention of the present invention, further comprising judging means of judging whether the content percentage of said product relevant substance included in said substance information obtained from said survey sheet falls within the content percentage range of said content percentage information of said product relevant information.

Further, a twenty-sixth invention of the present invention is a product survey system comprising:
the product survey support apparatus according to any one of the twenty-third to the twenty-fifth inventions of the present invention;
an input terminal which inputs said product information; and
a reply terminal which acquires said survey sheet and which comprises substance information preparing means of preparing said substance information on the basis of the survey sheet.

Further, a twenty-seventh invention of the present invention is a product survey method comprising the processes of:
inputting product substance information into a product substance information database which stores product substance information including at least product specification information for specifying a predetermined product, the names of substances contained in said products, and the contents of said substances;
setting said product specification information of a product and the name of a substance which serve as survey targets; and
searching, on the basis of a setting, said product specification information of said product and the name of a substance which serve as survey targets, from said product substance information database.

Further, a twenty-eighth invention of the present invention is an information-setting check method comprising the processes of:
setting product substance information including at least product specification information for specifying a predetermined product and the names of substances contained in said products;
with referring to a relevant substance information database which stores substances relevance information including at least the names of substances highly relevant to each other based on a predetermined criterion, checking whether a relevant substance related by said substances relevance information is included in the substances of said product substance information set by said substance information setting means; and
when said correspondence is found, outputting relevant substance information including at least the name of said relevant substance.

Further, a twenty-ninth invention of the present invention is a product relevant substance information providing method comprising the processes of:
using a product-substance information database which stores product relevant substance information including at least respective product information of various products and product relevant substance information containing at last the name of a substance selected from the substances contained respectively in the various products on the basis of a predetermined criterion;
receiving an input of said product information of a product serving as a survey target; and
searching said product relevant substance information corresponding to said product information inputted through said inputting means, from said product-substance information database.

Further, a thirtieth invention of the present invention is a product survey support method comprising:
the processes of a product relevant information providing method according to the twenty-ninth invention of the present invention;
the process of preparing a predetermined survey sheet; and
the process of outputting at least said survey sheet;
wherein
said survey sheet has subj ect matter that information including at least the content of a substance related to said product in said product is required.

Further, a thirty-first invention of the present invention is a computer program of causing a computer to execute all or part of the processes of: inputting product substance information into a product substance information database which stores product substance information including at least product specification information for specifying a predetermined product, the names of substances contained in said products, and the contents of said substances;settingsaid productspecificationinformation of a product and the name of a substance which serve as survey targets; and searching, on the basis of a setting, said product specification information of said product and the name of a substance which serve as survey targets, from said product substance information database; in a product survey method according to the twenty-seventh invention of the present invention.

Further, a thirty-second invention of the present invention is a computer program of causing a computer to execute all or part of the processes of: setting product substance information including at least product specification information for specifying a predetermined product and the names of substances contained in said products; with referring to a substances relevance information database which stores relevant substance information including at least the names of substances highly relevant to each other based on a predetermined criterion, checking whether a relevant substance related by said substances relevance information is included in the substances of said product substance information set by said substance information setting means; and when said correspondence is found, outputting relevant substance information including at least the name of said relevant substance;in aninformation-setting check method according to the twenty-eighth invention of the present invention.

Further, a thirty-third invention of the present invention is a computer program of causing a computer to execute all or part of the processes of: using a product-substance information database which stores product relevant substance information including at least respective product information of various products and product relevant substance information containing at last the name of a substance selected from the substances contained respectively in the various products on the basis of a predetermined criterion; receiving an input of said product information of a product serving as a survey target; and searching said product relevant substance information corresponding to said product information inputted through said inputting means, from said product-substance information database; in a product relevant substance information providing method according to the twenty-ninth invention of the present invention.

Further, a thirty-fourth invention of the present invention is a computer program of causing a computer to execute all or part of the processes of: the process of preparing a predetermined survey sheet; and the process of outputting at least said survey sheet; in a product survey support method according to the thirtieth invention of the present invention.

Further, a thirty-fifth invention of the present invention is a computer-processable medium carrying a program according to the thirty-first invention of the present inveniton.

Further, a thirty-sixth invention of the present invention is a computer-processable medium carrying a program according to the thirty-second invention of the present invention.

Further, a thirty-seventh invention of the present invention is a computer-processable medium carrying a program according to the thirty-third invention of the present invention.

Further, a thirty-eighth invention of the present invention is a computer-processable medium carrying a program according to the thirty-fourth invention of the present invention.

### BRIEF DESCRIPTION OF DRAWINGS

Figure 1 is a system configuration diagram according to an embodiment of the invention.
Figure 2 is a system configuration diagram according to an embodiment of the invention.
Figure 3 is a system configuration diagram according to an embodiment of the invention.
Figure 4 is a system configuration diagram according to an embodiment of the invention.
Figure 5 is a flowchart of a system according to an embodiment of the invention.
Figure 6 is a flowchart of a system according to an embodiment of the invention.
Figure 7 is a flowchart of a system according to an embodiment of the invention.
Figure 8 is a flowchart of a system according to an embodiment of the invention.
Figure 9 is a diagram showing a sample of content data according to an embodiment of the invention.
Figure 10 is a diagram showing a sample of a substance code table according to an embodiment of the invention.
Figure 11 is a diagram showing a sample of code-imparted content data according to an embodiment of the invention.
Figure 12 is a diagram showing a sample of a survey target substance table according to an embodiment of the invention.
Figure 13 is a diagram showing a sample of a content extracted table according to an embodiment of the invention.
Figure 14 is a diagram showing a sample of a product list according to an embodiment of the invention.
Figure 15 is a diagram showing a sample of an evaluation result according to an embodiment of the invention.
Figure 16 is a diagram showing a sample of an evaluation item list according to an embodiment of the invention.
Figure 17 is a system configuration diagram according to an embodiment of the invention.
Figure 18 is a system configuration diagram according to an embodiment of the invention.
Figure 19 is a system configuration diagram according to an embodiment of the invention.
Figure 20 is a system configuration diagram according to an embodiment of the invention.
Figure 21 is a system configuration diagram according to an embodiment of the invention.
Figure 22 is a flowchart of a system according to an embodiment of the invention.
Figure 23 is a flowchart of a system according to an embodiment of the invention.
Figure 24 is a flowchart of a system according to an embodiment of the invention.
Figure 25 is a flowchart of a system according to an embodiment of the invention.
Figure 26 is a system configuration diagram according to an embodiment of the invention.
Figure 27 is a system configuration diagram according to an embodiment of the invention.
Figure 28 is a diagram showing another sample of content data according to an embodiment of the invention.
Figure 29 is a system configuration diagram according to an embodiment of the invention.
Figure 30 is a system configuration diagram according to an embodiment of the invention.
Figure 31 is a flowchart of a system according to an embodiment of the invention.
Figure 32 is a flowchart of a system according to an embodiment of the invention.
Figure 33 is a system configuration diagram according to an embodiment of the invention.
Figure 34 is a conceptual diagram showing a relevant information database according to an embodiment of the invention.
Figure 35 is a system configuration diagram according to an embodiment of the invention.
Figure 36 is a system configuration diagram according to an embodiment of the invention.
Figure 37 is a system configuration diagram according to an embodiment of the invention.
Figure 38 is a diagram showing an example of input of content data according to an embodiment of the invention.
Figure 39 is a conceptual diagram showing a relevant information database according to an embodiment of the invention.
Figure 40 is a system configuration diagram according to an embodiment of the invention.
Figure 41 is a diagram showing an example of a survey sheet according to an embodiment of the invention.
Figure 42 is a diagram showing an at-survey care target substance list according to an embodiment of the invention.
Figure 43 is a diagram showing an example of a survey sheet according to an embodiment of the invention.
Figure 44 is a system configuration diagram according to an embodiment of the invention.
Figure 45 is a system configuration diagram according to an embodiment of the invention.
Figure 46 is a system configuration diagram according to an embodiment of the invention.
Figure 47 is a system configuration diagram according to an embodiment of the invention.
Figure 48 is a system configuration diagram according to an embodiment of the invention.

### [Description of the Reference Numerals]

- 1: Processing apparatus
- 2: Content data
- 3: Inputting means
- 3': Setting means
- 4: Substance code imparting means
- 5: Substance code extracting means
- 6: Content extracted data
- 7: Master
- 8: Substance code table
- 9: Survey target substance table
- 10: Substance code master
- 11: Survey target substance master
- 12: Evaluating means
- 13: Product list
- 14: Product list master
- 15: Evaluation item finalizing means
- 16: Evaluation item list
- 17: Evaluation item master
- 19: Insufficient item extracting means
- 2p, 2q, 2r, 2s: Content data
- 6p, 6q, 6p1, 6p2: Content extracted data
- 18a, 18b, 18c, 18d: Manufacturer
- 20a, 220b: Purchaser
- 21: Outputting means
- 22: Content database
- 23: Second outputting means
- 24: Product information providing apparatus
- 25: Product extracting means
- 26: Network
- 31: Checking means
- 32: Content data
- 33: Inputting means
- 34: Relevant information database
- 35: Guidance information
- 36: Target substance confirmation operation
- 37: Output operation
- 38: Relevant substance confirmation operation
- 39: Target substance extracting means
- 310: Accumulation database
- 311: Content percentage confirmation operation
- 41: Product information providing system
- 42: Survey sheet outputting means
- 43: Survey sheet
- 44: At-survey care target substance list
- 45: Relevant information database
- 46: Survey sheet inputting means
- 47: Survey result outputting means
- 48: Manufacturer
- 49: Purchaser
- 410: Relevant substance content range database
- 411: Checking means

### BEST MODE FOR CARRYING OUT THE INVENTION

Embodiments of a product survey system and a product information providing system according to the invention are described below with reference to the drawings.

A product according to the invention indicates any of primary products such as raw materials, intermediate products such as parts and components processed from the raw materials, and end products manufactured from the primary products and the intermediate products. Thus, all products manufactured from substances are targets in the invention.

### [Embodiment 1]

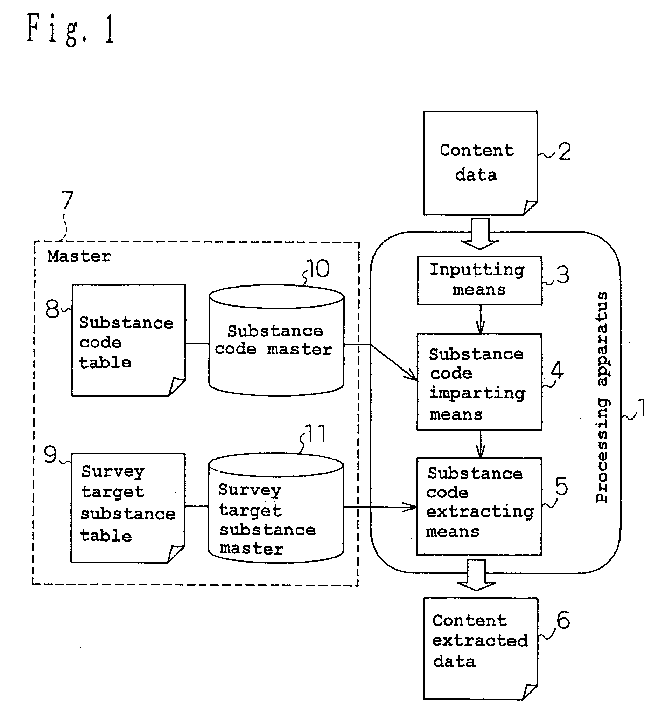

The configuration of a product survey system according to Embodiment 1 of the invention is described below with reference to Figure 1. A processing apparatus 1 comprises inputting means 3, substance code imparting means 4, and substance code extracting means 5. The processing apparatus 1 searches a master 7 including a substance code master 10 for storing a substance code table 8 and a survey target substance master 11 for storing a survey target substance table 9, and thereby performs predetermined processes. The content data 2 includes at least the names of the component substances contained in a product, the contained amounts of the component substances, and information on the article number of the product. The content data 3 is processed by the substance code imparting means 4 and the substance code extractingmeans 5 , and results in content extracted data 6. In the invention, the master 7 may comprise a plurality of content database for accumulating content data 2. In this case, inputted content data 2 is accumulated temporarily, and read out when necessary.

The content data according to the invention may be expressedbythemass (orweight) of each component substance contained in one unit of the product, or alternatively by the total weight of one unit of the product and the mass (or weight) content rate of each component substance.

One unit of the product may be set arbitrarily depending on the form of package. For example, twelve products maybe set to be one unit of the product. In addition to the names and the contents of the component substances and the article number of the product, the content data 2 may include the date of data generation, the name of the product, the name of the manufacturer, the name of the provider, the material safety data sheet (MSDS) number, and the purpose of usage (such as packaging, washing, and electronic components), and the like. The form of the content data may be electronic information, or alternatively, information recorded in a substance medium such as a paper sheet, and is not limited specifically. However, from the viewpoint of easy handling of the data, it is preferable that the content data is in the form of electronic information. These descriptions on the product and the content data are also applied in the subsequent embodiments.

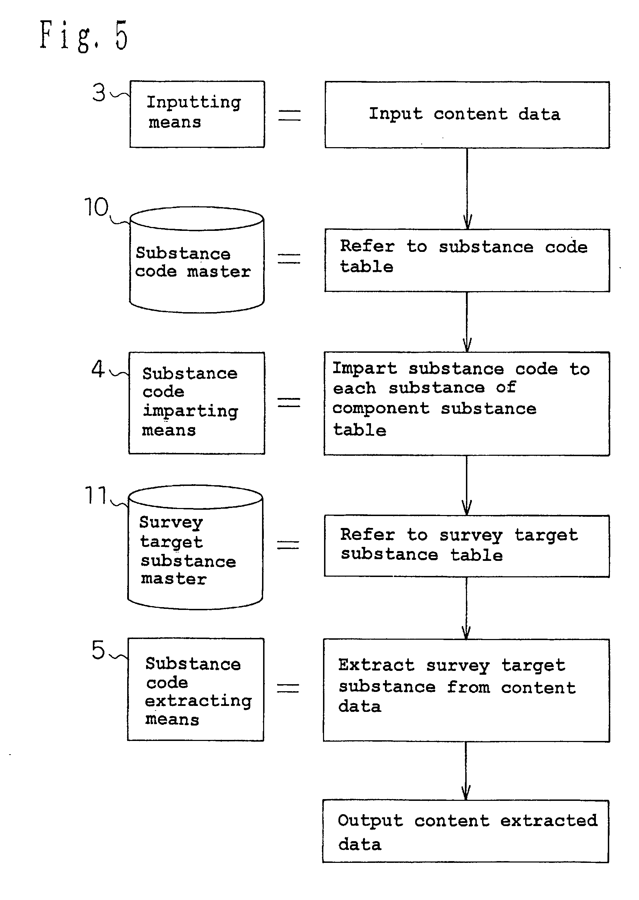

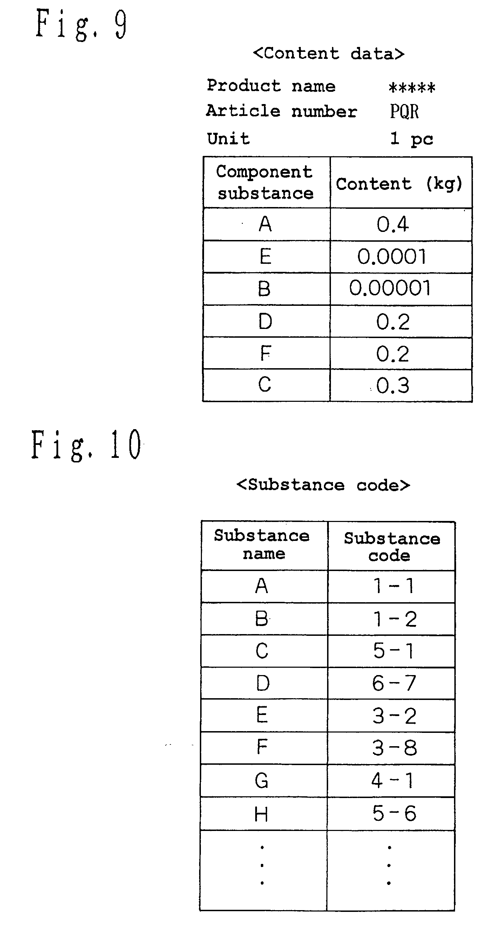

The operation of the system according to Embodiment 1 is described below with reference to Figure 5. At the same time, described is an embodiment of a product survey method according to the invention. Content data 2 is inputted through the inputting means 3. Figure 9 shows a sample of the content data 2. The content data 2 includes: the name, the article number, and the unit of a product; and the names and the contents of the component substances constituting the product. In case that each component substance has a part number, an article number, a unit, and the like, these data items may be included in the content data 2. Then, the substance code imparting means 4 refers to the substance code table 8 stored in the substance code master 10. Figure 10 shows a sample of the substance code table 8. The substance code table 8 provides codes corresponding to substance names. The code setting is not limited to a specific method unless the codes are set in advance for the substance names. However, it is preferable to use CAS numbers which are imparted to substances described in the literature of chemistry and the like, by Chemical Abstracts Service of the American Chemical Society. This is because the CAS numbers are available for a large number of substances, and hence have universality. The above-mentioned description on the substance codes is also applied in the subsequent embodiments.

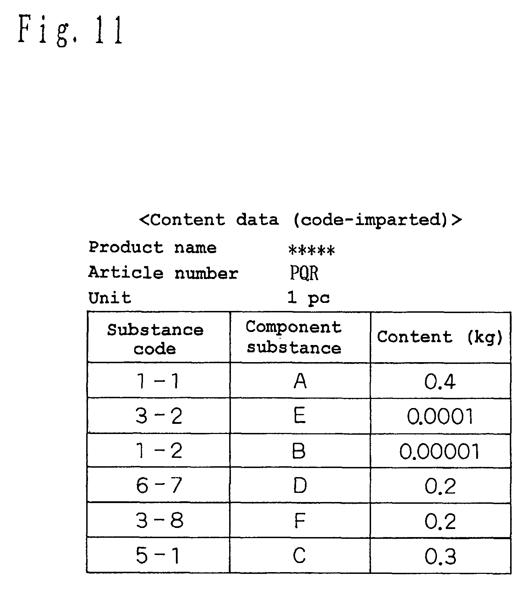

The substance code imparting means 4 imparts a substance code to each component substance in the content data 2 using the referred substance code table 8. As a result, code-imparted content data is obtained. Figure 11 shows a sample of the code-imparted content data.

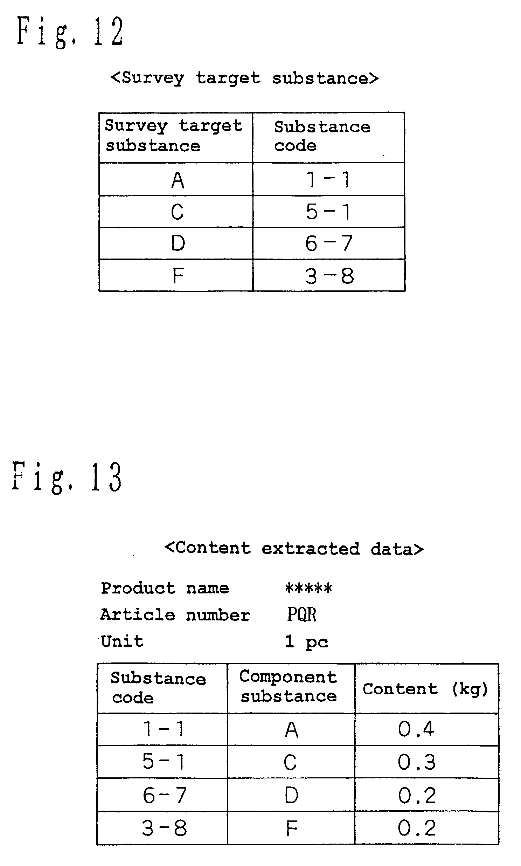

Then, the substance code extracting means 5 refers to survey target substances which are defined as survey targets in advance in the survey target substance table 9 and which are stored in the survey target master 11. Figure 12 shows a sample of the survey target substance table. The survey target substance includes: component substances necessary in the survey of a predetermined product; and the substance codes thereof.

Then, the substance code extracting means 5 extracts the item of component substance as survey target from the code-imparted content data, using the referred survey target substance table. As a result, content extracted data 6 is obtained. Figure 13 shows a sample of the content extracted data 6.

The content extracted data 6 includes: component substances necessary in the product survey; and the contents thereof.

In the prior art product survey, component substances specified as the targets are distinct depending on the purchaser (company or the like) of the product, and accordingly the manufacturer (company or the like) of the product needs to disclose survey data which lists distinct target substance items depending on the purchaser. This has caused the problem of a notable burden to the manufacturer in the data disclosure. In contrast, in the product survey system according to the invention, the survey target substances are extracted finally from the disclosed data by the purchaser. Accordingly, even if the manufacturer may disclose content data which lists all recognizable substances contained in the product, to all purchasers each desiring distinct target substances, each purchaser can process the data easily. As such, the manufacturer can disclose content data of the same substance items equally to all purchasers. This reduces the burden to the manufacturer in the data disclosure. Further, even when the component substances necessary in the product survey are changed in the purchaser side, this change can be treated easily by changing the survey target substance master 11, or alternatively by changing the data thereof (that is, the data in the survey target substance table 9). In this case, setting means of setting the data in the survey target substance table 9 from the outside is further provided, whereby the data in the survey target substance master 11 is changed. In this setting, a format is used such as to permit unique interpretation of the correspondence between the information on the product and the like described in the content data 2 and the information described in the survey target substance table.

In the invention, the installation of the processing apparatus 1 and the master 7 is not limited whether in the purchaser or the manufacturer. That possible cases include: a case that the processing apparatus 1 and the master 7 are installed in the purchaser; a case that the processing apparatus 1 and the master 7 are installed in the manufacturer; and a case that the inputting means 3, the substance code master 10, and the substance code imparting means 4 are installed in the manufacturer, and that the survey target substance master 11 and the substance code extracting means 5 are installed in the purchaser.

### [Embodiment 2]

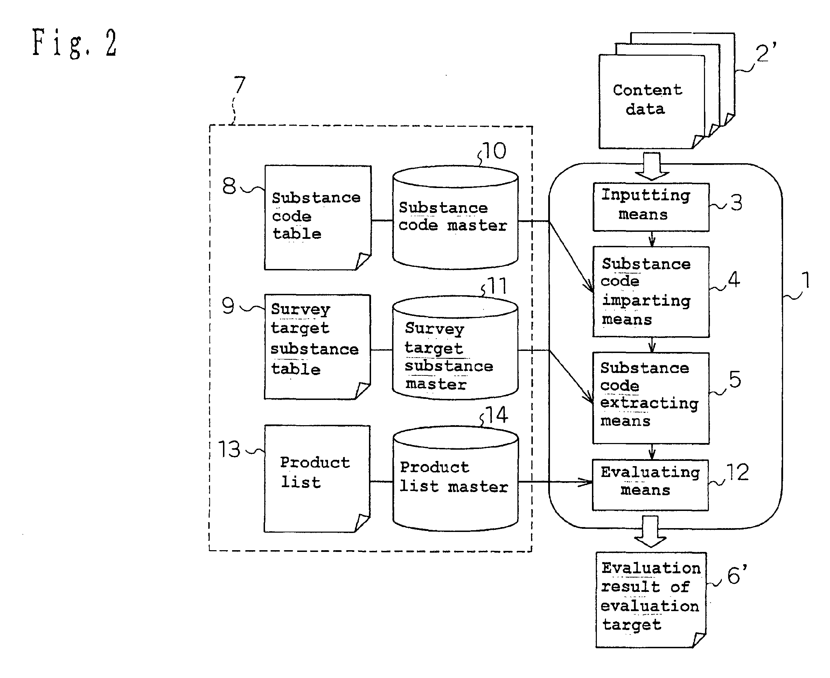

The configuration of a product survey system according to Embodiment 2 of the invention is described below with reference to Figure 2. The present embodiment is different from Embodiment 1 shown in Figure 1 in the point that evaluating means 12 and a product list master 14 for storing a product substance list table 13 are added.

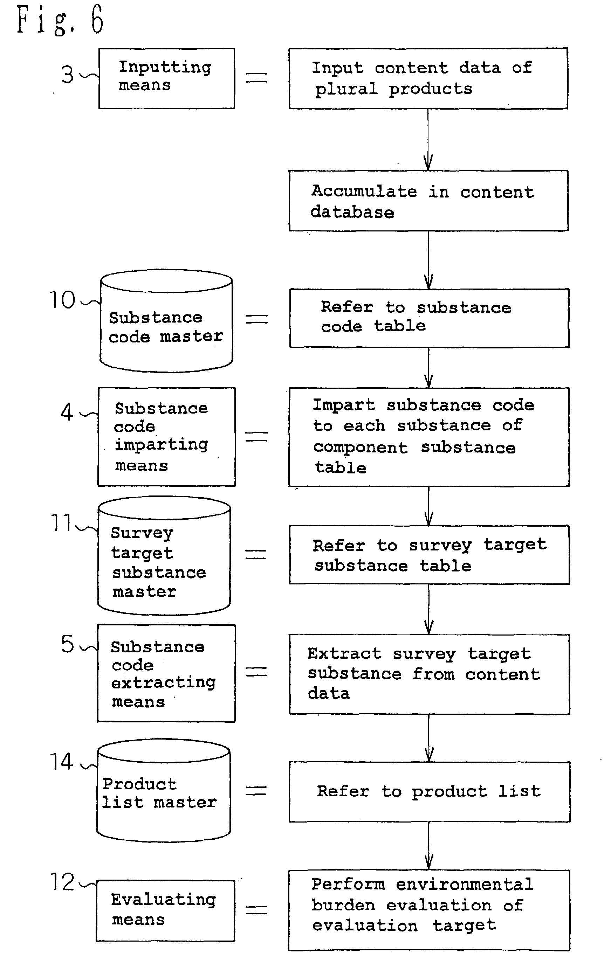

The operation of Embodiment 2 is described below with reference to Figure 6. Content data 2' for each of plural products is inputted through the inputting means 3. Figure 9 shows a sample of the content data 2. The content data 2' is then accumulated in a content database not shown.

Then, with referring to the substance code master 10, the substance code impartingmeans 4 imparts substance codes to the component substances in each content data. Then, with referring to the survey target master 11, the substance code extractingmeans 5 extracts the survey target component substances from the content data of each product.

Then, with referring to the product list in the product list master 14 having the article numbers of the products for the evaluation target and, in some cases, the amounts of use thereof, the evaluating means 12 evaluates the environmental burden of the evaluation target, and thereby outputs evaluation result 6'.

The evaluation target according to the invention indicates a product manufactured generally from a plurality of products (such as parts and rawmaterials). Accordingly, the product stored in the product list master 14 is a product manufactured from a plurality of sub-products which are products stored in the survey target substance master 11. The evaluating means 12 evaluates the product on the basis of the respective content data of the sub-products.

The invention is applicable to processes and factories in which a plurality of products are processed. Such evaluation targets are also the targets in the invention. An example that the evaluation target is a process or a factory is the pollutant release and transfer register (PRTR) system presently enforced in Japan. The above-mentioned description on the evaluation target is also applied in the subsequent embodiments.

The evaluation on the environmental burden performed by the evaluating means 12 includes, for example: aggregation of the amounts of use of substances which are classified as environmental burden substances; evaluation of improvement relative to a reference product; life cycle assessment (LCA) in which the environmental burden of a product is evaluated quantitatively from resource mining to disposal; and other various evaluation methods and evaluation items. These evaluation methods and evaluation items may be set arbitrarily through dedicated settingmeans from the outside. The above-mentioned description on the evaluation target and the evaluation is also applied in the subsequent embodiments.

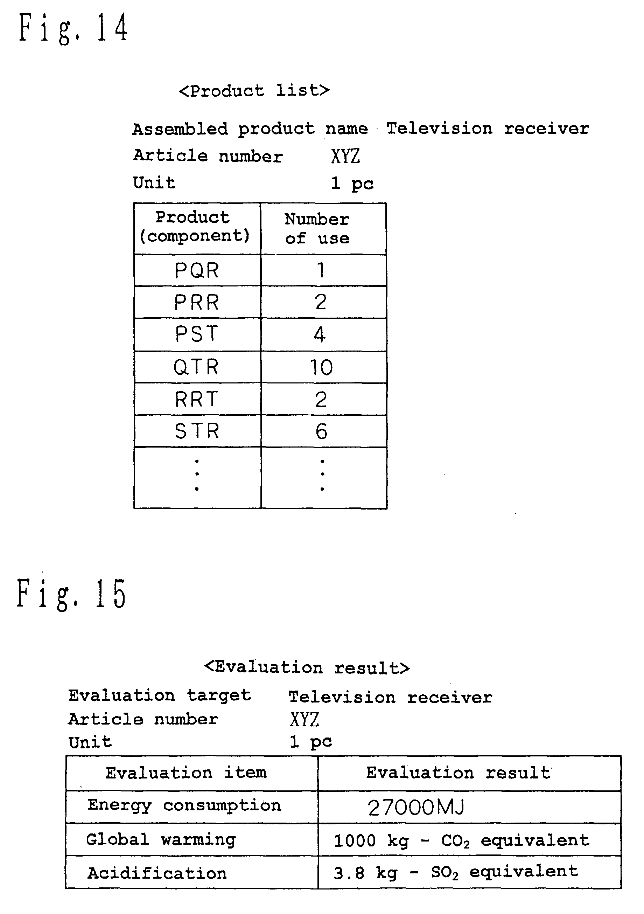

Figure 14 shows an example of a product list stored in the product list master 14. The example illustrates the case that the evaluation target is a television receiver , and shows the numbers of respective products (such as parts and raw materials) used in the fabrication of a television receiver.

Figure 15 shows an example of an evaluation result obtained by the evaluating means. In the example, an evaluation result of life cycle assessment (LCA) covering the range from the fabrication of the products used in the fabrication of the evaluation target television receiver to the use and the disposal of the television receiver is shown in the evaluation items of energy consumption, global warming, and global acidification. According to Embodiment 2 of the invention, even when a plurality of products are included in an evaluation target, survey target substances are extracted efficiently, whereby the environmental burden of the evaluation target is evaluated efficiently.

In the above-mentioned description, the evaluation target has been a product composed of a plurality of products. However, similarly to Embodiment 1, the environmental burden of the product may be evaluated from the content data of a single product.

### [Embodiment 3]

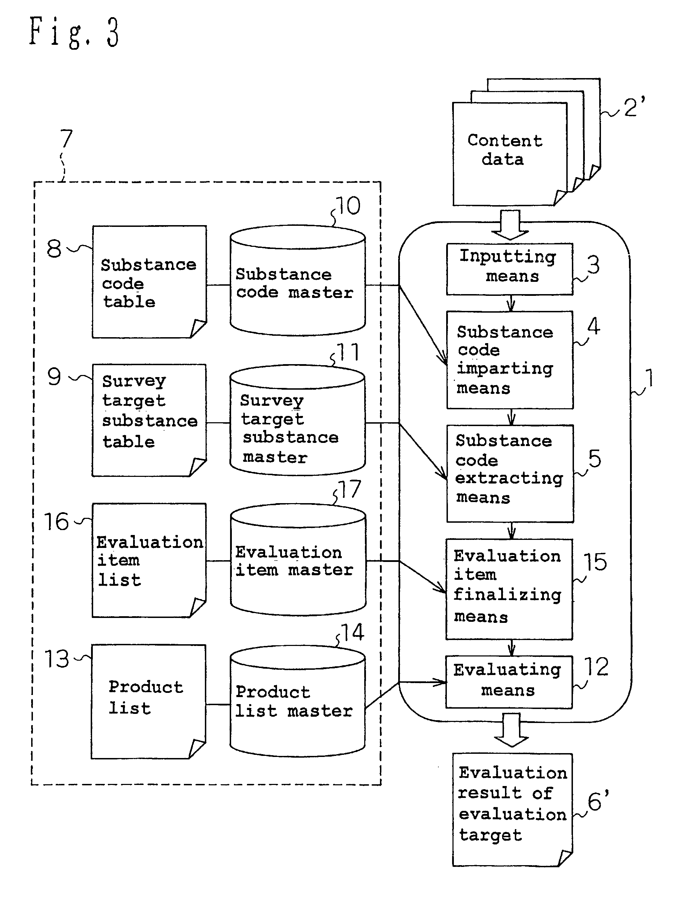

The configuration of a product survey system according to Embodiment 3 of the invention is described below with reference to Figure 3. The present embodiment is different from Embodiment 2 shown in Figure 2 in the point that an evaluation item master 17 for storing an evaluation item list 16 and evaluation item finalizing means 15 are added.

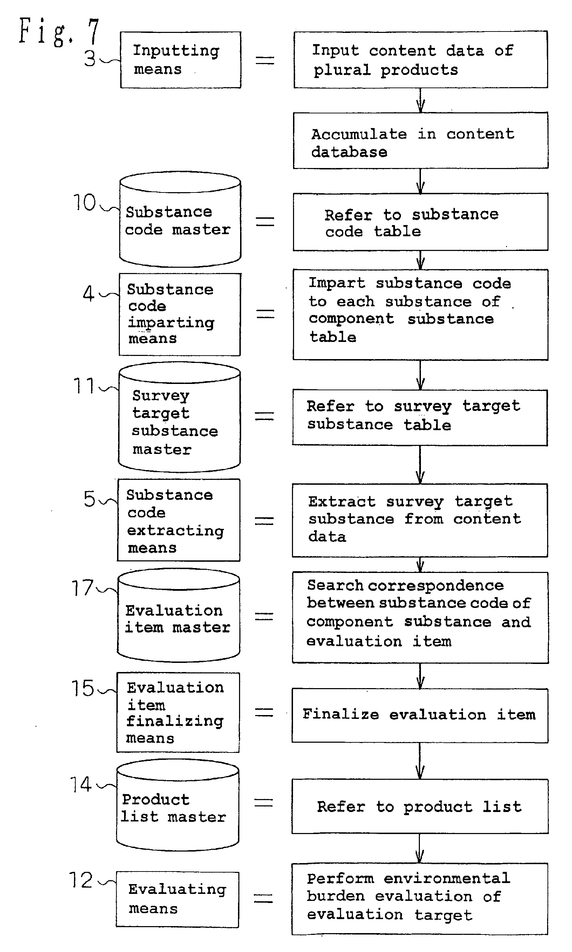

The operation of Embodiment 3 is described below with reference to Figure 7. Content data 2' of a plurality of products is inputted through the inputting means 3. The content data 2' is then accumulated in a content database not shown. Then, with referring to the substance code master 10, the substance code imparting means 4 imparts substance codes to the component substances in each content data. Then, with referring to the survey target master 11, the substance code extractingmeans 5 extracts the survey target component substances from the content data of each product.

Then, with referring to the evaluation item master 17 storing the evaluation item list 16 in which evaluation items for a predetermined product are corresponded to the substance codes of the component substances relevant to these evaluation items, the valuation item finalizing means 15 searches the correspondence between the substance codes of the component substances and the evaluation items, and thereby finalizes the evaluation items of the above-mentioned predetermined product. These evaluation items may be set arbitrarily through dedicated setting means from the outside.

Then, with referring to the product list 13 in the product list master 14 having the article numbers of the products used in the evaluation target and the amounts of use thereof, the evaluating means 12 evaluates the environmental burden of the evaluation target with respect to the evaluation items finalized by the valuation item finalizing means 15, and thereby outputs evaluation result 6'.

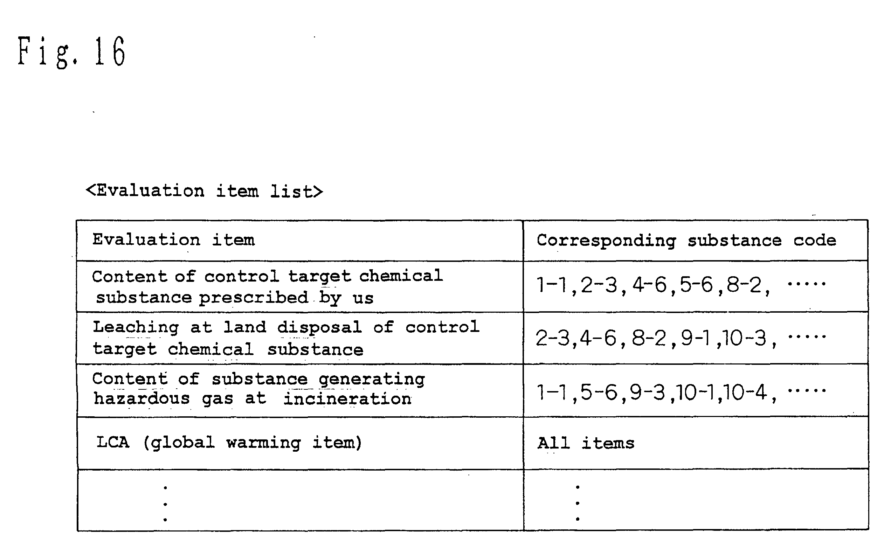

Figure 16 shows an example of the evaluation item list 16 stored in the evaluation item master 17. The example shows substance codes corresponding to each evaluation item for a television receiver which is the evaluation target product. For example, in the evaluation item "Contents of control target chemical substances prescribed by our company", substances "1-1, 2-3, 4-6, 8-2" and so on are specified as targets. On the basis of these codes, the amounts of the target substances are aggregated, whereby the evaluation item "Contents of control target chemical substances prescribed by our company" of the evaluation target television receiver is evaluated.

When the substances "1-1, 2-3, 4-6, 8-2" and so on are not contained in the evaluation target product, the valuation item finalizing means 15 does not select the evaluation item "Contents of control target chemical substances prescribed by our company", and hence this evaluation item is omitted. The evaluating means 12 does not evaluate this omitted evaluation item.

When a purchaser of a product makes a request to the manufacturer for the survey of the product, in general, in addition to a survey of the contents of the component substances of the product, a survey of evaluation results of certain evaluation items is requested to the manufacturer. When the survey of evaluation results of the evaluation items is requested to the manufacturer, selection of evaluation items for each product is necessary in some cases. This has caused a burden in making the request. In such a situation, by using Embodiment 3 of the invention, an evaluation item list in which necessary evaluation items are corresponded to the content data of the component substances of a product in advance on the basis of it, is prepared. By virtue of this, necessary evaluation items for various products are easily selected from the content data, and then the survey is advantageously requested to the manufacturer.

### [Embodiment 4]

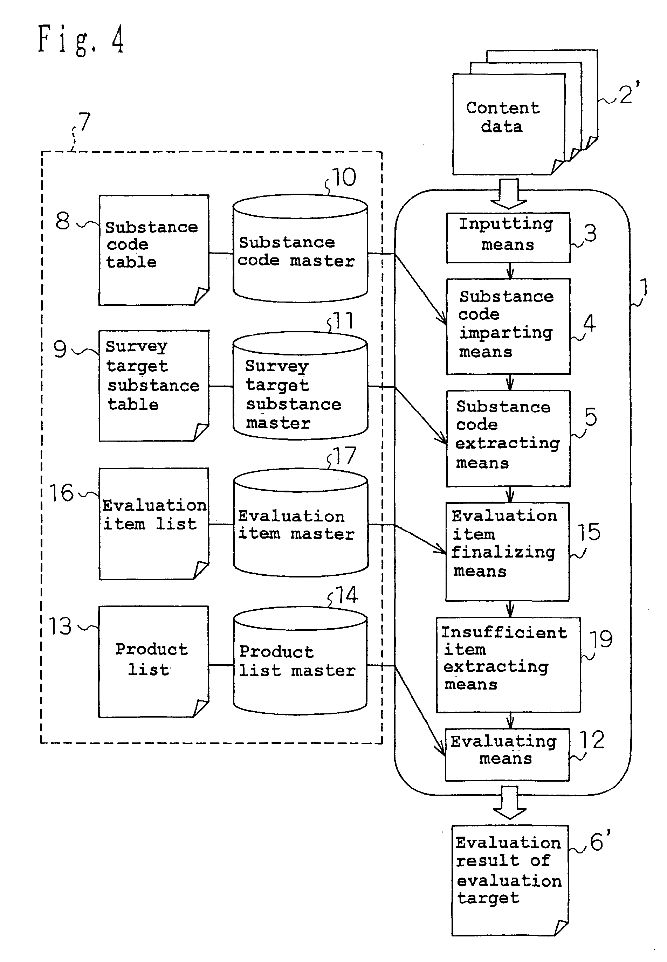

The configuration of a product survey system according to Embodiment 4 of the invention is described below with reference to Figure 4. The present embodiment is different from Embodiment 3 shown in Figure 3 in the point that insufficient item extracting means 19 is added.

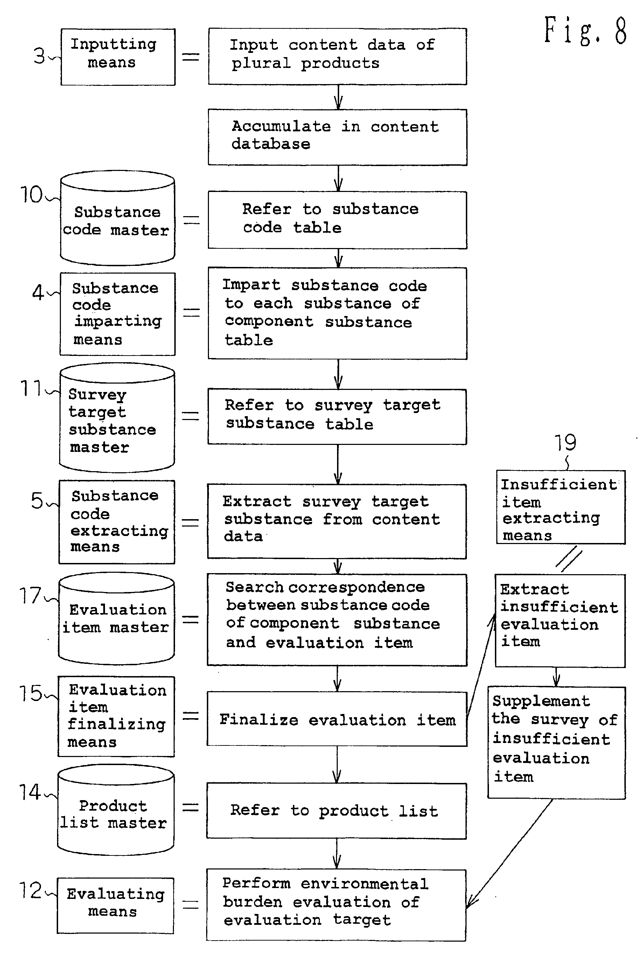

The operation of Embodiment 4 is described below with reference to Figure 8. Description of like points to Embodiments 1-3 is omitted, while different points solely are described. In general, evaluation items finalized by the valuation item finalizing means 15 are classified into items which can be calculated and evaluated directly from the content data and items which cannot be evaluated directly from the content data. Among the evaluation items finalized by the valuation item finalizingmeans 15, items which cannot be evaluated directly from the content data are extracted by the insufficient item extracting means 19, whereby a survey of these items solely is requested to the manufacturer of the product. This reduces the number of items of the survey request, and hence reduces the survey burden to the manufacturer of the product. For example, evaluation items "Are recycled parts used?", "Is long-life designed?", and the like cannot be evaluated directly from the content data, and hence are extracted by the insufficient item extracting means 19.

In the prior art, a survey has been requested to the manufacturer even for survey items which can be calculated and evaluated from the content data solely of the component substances. In contrast, by using Embodiment 4, items which can be inferred and calculated from the content data of the component substances are calculated automatically, whereby the number of survey items is reduced, and then the survey is requested to the manufacturer. This reduces the survey burden to the manufacturer.

In Embodiments 1-4, the content data of the product has been inputted through the inputting means. However, in addition to the content data, additional information on the product may be inputted. This permits a wider product survey. Information other than the content data includes the form of a check sheet used for checking the evaluation items of the product, and other various information. Further, when information on the factory having fabricated the product is treated together with the content data, a wider product survey is available. Such information includes: the amount of input energy and/or the amount of environmental release to any one of the atmosphere, the water, the soil, and the solid waste, with respect to the entirety of the factory having fabricated the product; and the amount of input energy and/or the amount of environmental release to any one of the atmosphere, the water, the soil, and the solid waste, when one unit of the product is fabricated.

### [Embodiment 5]

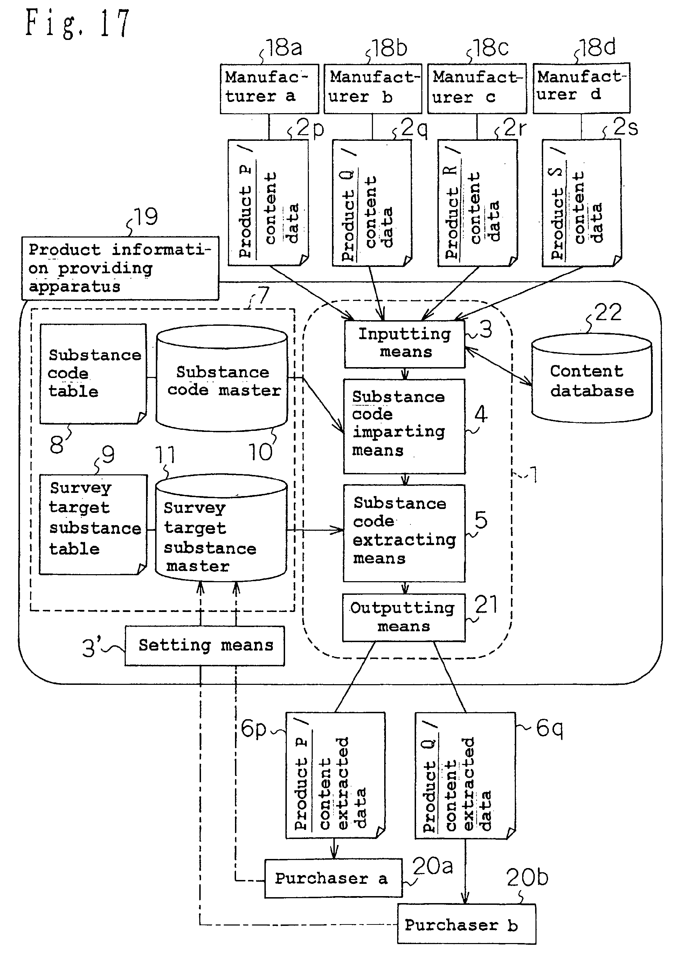

The configuration of a product information providing system according to Embodiment 5 of the invention is described below with reference to Figure 17. Like or corresponding parts to Figure 1 are designated by like numerals, and hence detailed description is omitted. With respect to a product P fabricated by a manufacturer 18a, a product Q fabricated by a manufacturer 18b, a product R fabricated by a manufacturer 18c, and a product S fabricated by a manufacturer 18d, content data 2p, 2q, 2r, 2s, respectively, are sent to a product information providing apparatus 19. Each content data 2p-2s is inputted through the inputting means 3. The product information providing apparatus 19 constitutes a system which comprises: a processing apparatus 1 including inputting means 3, substance code imparting means 4, substance code extracting means 5, and outputting means 21; a master 7 including a substance code master 10 for storing a substance code table 8 and a survey target substance master 11 for storing a survey target master 9; and a content database 22. The product information providing apparatus 24 provides content extracted data 6p and 6q desired by a purchaser 20a and a purchaser 20b.

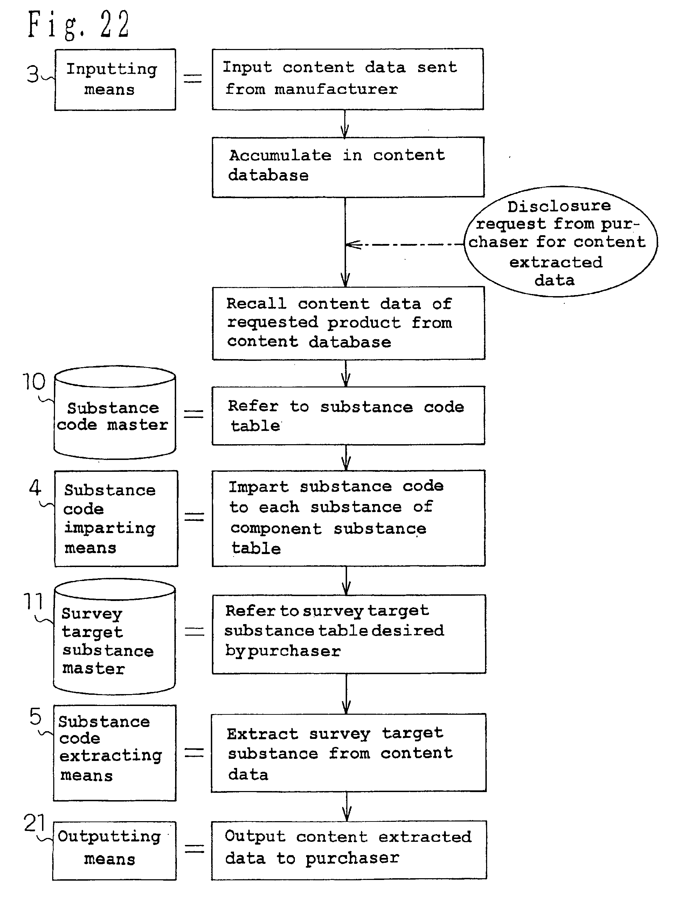

The operation of Embodiment 5 is described below with reference to Figure 22. Content data 2 sent from a manufacturer is inputted through the inputting means 3, and thereby accumulated in the content database. A sample of the content data is shown in Figure 9, similarly to Embodiment 1. The inputting means may be installed in the manufacturer.

Using a setting means 3', the purchasers 20a and 20b set a survey target product and the names of the substances constituting the product, into the survey target substance master 11 in the form of a survey target substance table 9 in advance.

Then, the purchasers 20a, 20b issue a disclosure request for the content data of the survey target product. In response to the disclosure request, all content data inputted through the inputting means 3 is recalled from the content database 22.

Then, the substance code imparting means 4 refers to the substance code table stored in the substance code master 10. A sample of the substance code table is shown in Figure 10, similarly to Embodiment 1. The substance code imparting means 4 imparts a substance code to each component substance in the content data using the referred substance code table 8. As a result, code-imparted content data is obtained. A sample of the code-imparted content data is shown in Figure 11, similarly to Embodiment 1.

Then, the substance code extracting means 5 refers to the survey target substance table 9 which is set and prepared for each of the purchasers 20a and 20b through the inputting means 3 and which is stored in the survey target master 11. A sample of the survey target substance table is shown in Figure 12, similarly to Embodiment 1. The survey target substance includes: component predetermined substances necessary in the survey of a product; and the substance codes thereof.

The substance code extractingmeans 5 further extracts selectively the component substances of the survey target product alone for each of the purchasers 20a and 20b from the code-imparted content data, using the referred survey target substance table 9. As a result, obtained is content extracted data which describes the component substances and their contents that are necessary in the product survey for each of the purchasers 20a and 20b. The outputting means 21 outputs the content extracted data to the purchaser having issued the disclosure request. A sample of the content extracted data is shown in Figure 13, similarly to Embodiment 1. The content extracted data includes the names and the contents of the component substances of the product necessary in the survey for each purchaser.

In Figure 17, the survey target substance master 11 for storing the survey target substance tables 9 for the purchasers 20a and 20b is managed in the product information providing apparatus 19. However, a survey target substance master 11 may be prepared separately in each of the purchasers 20a and 20b. In this case, a survey target substance table 9 therein is referred to, and thereby provides necessary information to the substance code extracting means 5, whereby extraction operation is performed.

The disclosure request for the content extracted data issued from the purchasers 20a and 20b may be issued to the product information providing apparatus 19. Disclosure requests may be issued temporarily to the manufacturers 18a-18d, and after that, a disclosure request may be issued from the manufacturer to the product information providing apparatus 19. Further, at the time when the purchaser issues a disclosure request to the product information providing apparatus, in case that the content database 22 does not store the content data of the product under the disclosure request, the product information providing apparatus may request the manufacturer for the submission of the content data, whereby the content data may be supplemented.

In contrast to the prior art in which the purchaser makes a disclosure request directly to the manufacturer, in the product information providing system according to the invention, the content data of all products possessed by the manufacturer are totally managed, while the kinds of component substances which become necessary depending on the desired product are managed for the purchaser, whereby content data is selectively outputted depending on the necessity in the purchaser.

Accordingly, even when a plurality of purchasers make disclosure requests for the content data of a specific product, the manufacturer does not need to consider the kinds of content data to be disclosed separately to each purchaser. That is, the product information providing system discloses automatically the content data to each purchaser. This reduces advantageously the burden to the manufacturer.

In the prior art product survey, even for the same product, distinct kinds and numbers of component substances are specified as the survey targets depending on the purchaser (company or the like) of the product, and accordingly the manufacturer (company or the like) of the product needs to disclose survey data which lists distinct target substance items depending on the purchaser. This has caused the problem of a notable burden to the manufacturer in the data disclosure. In contrast, in the product information providing system according to Embodiment 5 of the invention, a content database, a substance code master, and a survey target substance master are used. Then, regardless of the kinds of requests from the purchasers, the manufacturer lists the content data of all recognizable substances contained in all of their products, and then accumulates the data in the content database 22, while the purchaser sets the target substance items of the desired product into the survey target master 11, whereby the substance names in the content database 22 and the substance names in the survey target substance master 11 are linked using the substance codes in the substance code master 10.

Accordingly, the content data is provided easily to the purchasers each specifying distinct survey target substances for the same product.

The manufacturer can disclose content data of the same substance items equally to all purchasers. This reduces the burden to the manufacturer in the data disclosure. Further, even when the component substances necessary in the product survey are changed in the purchaser, this change can be treated easily by changing the survey target substance master.

### [Embodiment 6]

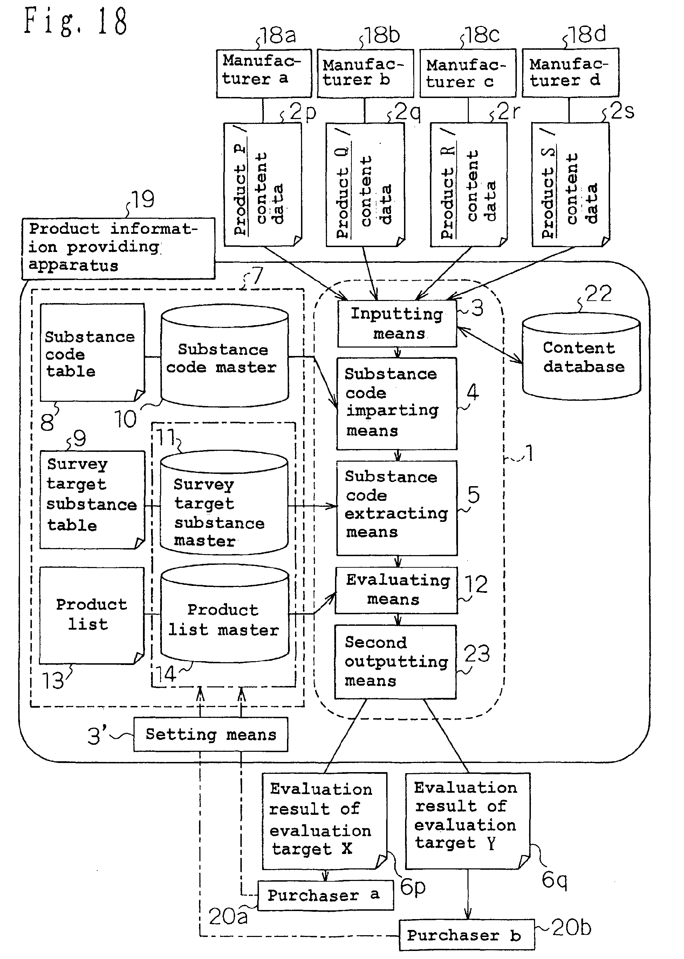

The configuration of a product information providing system according to Embodiment 6 of the invention is described below with reference to Figure 18. The present embodiment is different from Embodiment 5 shown in Figure 17 in the point that evaluating means 12 and a product list master 14 for storing a product list 13 are added and that second outputting means 23 is provided in place of the outputting means 21.

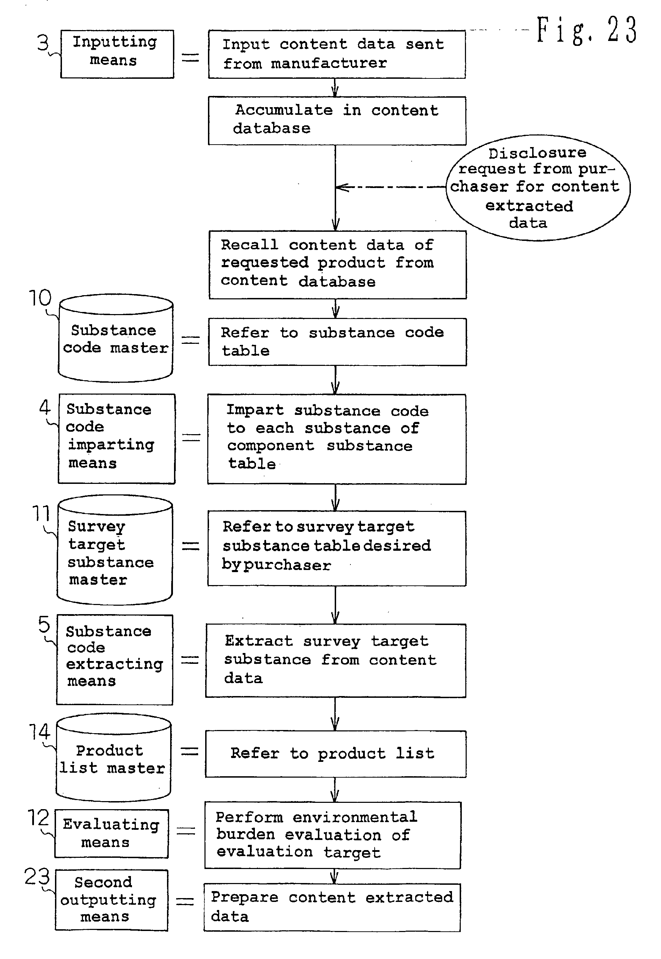

Basic operation of Embodiment 6 is described below with reference to Figure 23. Similarly to Embodiment 5, content extracted data is obtained by the inputting means 3, the substance code imparting means 4, and the substance code extracting means 5. Then, with referring to the product list including the article number and the amount of use of each product for an evaluation target, the evaluating means 12 evaluates the environmental burden of the evaluation target, whereby the second outputting means 23 notifies the result to the purchaser.

Detailed operation of Embodiment 6 is described below with reference to Figure 23. The operation of the inputting means 3 through the operation of the substance code extracting means 5 are the same as those shown in Figure 22 according to Embodiment 5. Then, with referring to the product lists 13 in the product list master 14 which has been set through the setting means 3' by the purchasers 20a and 20b in advance and which has the article numbers of predetermined products for the evaluation target and, in some cases, the amounts of use thereof, the evaluating means 12 evaluates the environmental burden of the evaluation target, and thereby outputs evaluation results 6p and 6q through the second outputting means 23. At that time, in addition to the evaluation results 6p and 6q of the survey target product, the content data of the other products may be outputted simultaneously.

The evaluation target and the subject matter of the evaluation according to the invention are similar to those of Embodiment 2, and hence detailed description is omitted.

According to Embodiment 6, even when a plurality of products are included in an evaluation target, survey target substances are extracted efficiently. Further, the environmental burden of the evaluation target is evaluated efficiently.

In the above-mentioned description, the evaluation target has been a product composed of a plurality of products. However, similarly to Embodiment 5, the environmental burden of the product may be evaluated from the content data of a single product.

### [Embodiment 7]

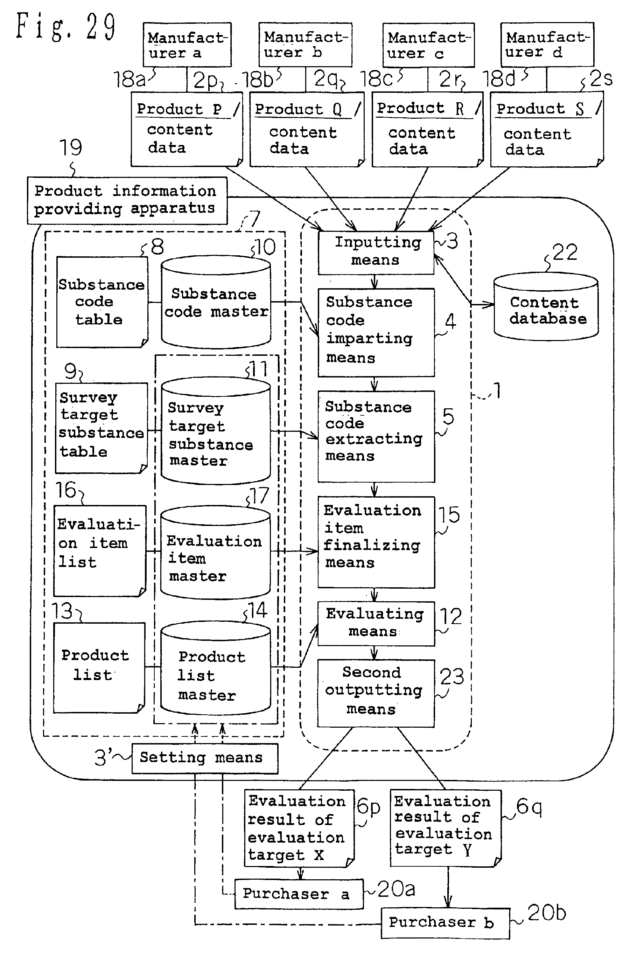

The configuration of a product survey system according to Embodiment 7 of the invention is described below with reference to Figure 29. The present embodiment is different from Embodiment 6 shown in Figure 18 in the point that an evaluation item master 17 for storing an evaluation item list 16 and evaluation item finalizing means 15 are added.

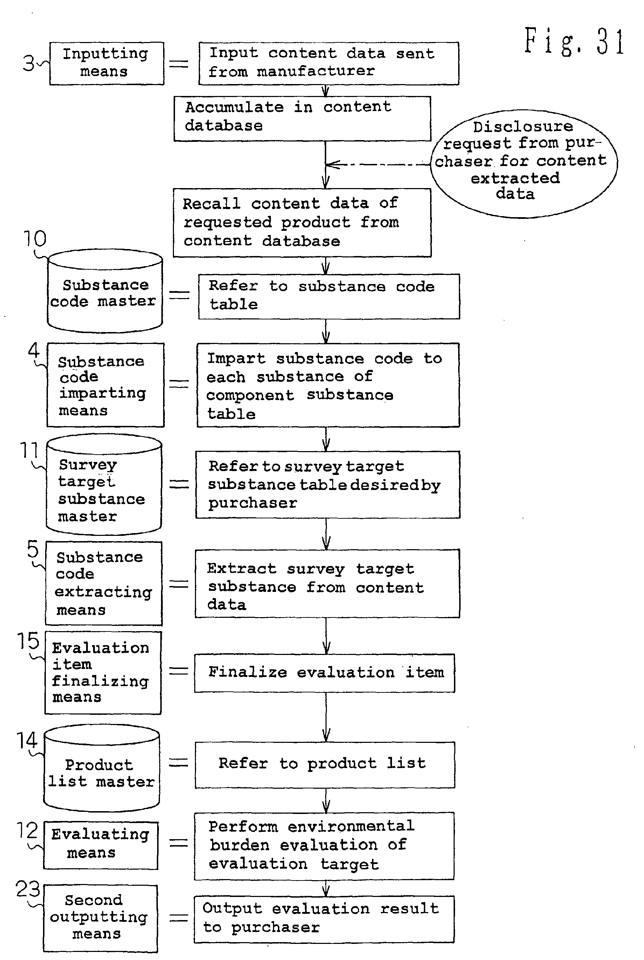

The operation of Embodiment 7 is described below with reference to Figure 31. The operation of the inputting means 3 through the operation of the substance code extracting means 5 are the same as those shown in Figure 22 according to Embodiment 5. Then, with referring to the evaluation item master 17 storing the evaluation item list 16 which has been set through the setting means 3' by the purchasers 20a and 20b in advance and in which evaluation items for a predetermined product are corresponded to the substance codes of the component substances relevant to these evaluation items, the valuation item finalizing means 15 searches the correspondence between the substance codes of the component substances and the evaluation items, and thereby finalizes the evaluation items.

Then, similarly to Embodiment 6, with referring to the product list 13 in the product list master 14 having the article numbers of the products used in the evaluation target and the amounts of use thereof, the evaluating means 12 evaluates the environmental burden of the evaluation target with respect to the evaluation items finalized by the valuation item finalizing means 15. The evaluation result is outputted through the second outputting means 23 to the purchasers 20a and 20b.

Figure 16 shows an example of the evaluation item list stored in the evaluation itemmaster 17 , which has the subj ect matter similar to that of Embodiment 3. The example shows substance codes corresponding to each evaluation item for a television receiver which is the evaluation target product. For example, in the evaluation item "Contents of control target chemical substances prescribed by our company", substances "1-1, 2-3, 4-6, 8-2" and so on are specified as targets. On the basis of these codes, the amounts of the target substances are aggregated, whereby the evaluation item "Contents of control target chemical substances prescribed by our company" of the evaluation target television receiver is evaluated. When the substances "1-1, 2-3, 4-6, 8-2" and so on are not contained in the evaluation target product, the valuation item finalizing means 15 does not select the evaluation item "Contents of control target chemical substances prescribed by our company", and hence this evaluation item is omitted. The evaluating means 12 does not evaluate this omitted evaluation item.

When a purchaser of a product makes a request to the manufacturer for the survey of the product, in general, in addition to a survey of the contents of the component substances of the product, a survey of evaluation results of certain evaluation items is requested to the manufacturer. When the survey of evaluation results of the evaluation items is requested to the manufacturer, selection of evaluation items for each product is necessary in some cases. This has caused a burden in making the request. In such a situation, by using Embodiment 7 of the invention, an evaluation item list in which necessary evaluation items are corresponded in advance on the basis of the content data of the component substances of a product is prepared. By virtue of this, necessary evaluation items for various products are easily selected from the content data, and then the survey is advantageously requested to the manufacturer.

### [Embodiment 8]

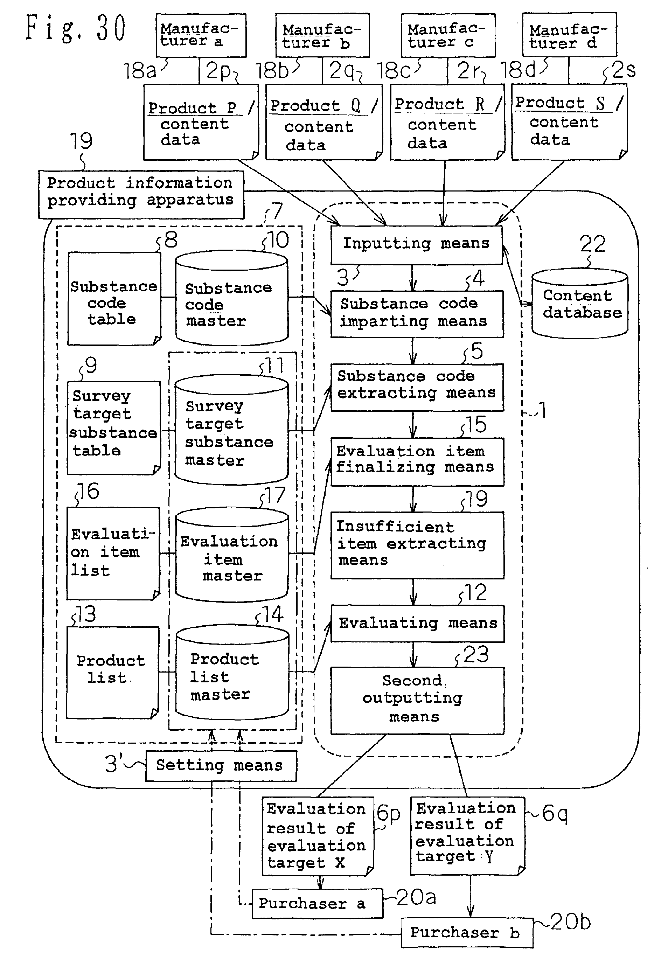

The configuration of aproduct survey system according to Embodiment 8 of the invention is described below with reference to Figure 30. The present embodiment is different from Embodiment 7 shown in Figure 29 in the point that insufficient item extracting means 19 is added.

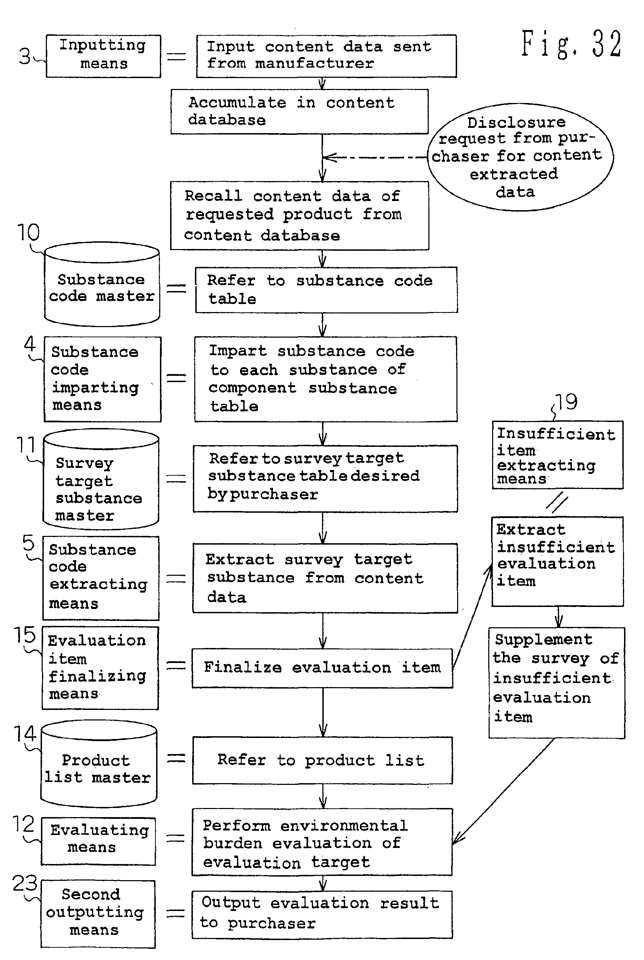

The operation of Embodiment 8 is described below with reference to Figure 32. The operation of the inputting means 3 through the operation of the substance code extracting means 5 are the same as those shown in Figure 22 according to Embodiment 5.

In general, evaluation items finalized by the valuation item finalizingmeans 15 are classified into items which can be calculated and evaluated directly from the content data and items which cannot be evaluated directly from the content data. Among the evaluation items finalized by the valuation item finalizing means 15, items which cannot be evaluated directly from the content data are extracted by the insufficient item extracting means 19, and thereby omitted from the target of the evaluating means 12. This reduces the number of items of the survey request. For example, evaluation items "Are recycled parts used?", "Is long-life designed?", and the like cannot be evaluated directly from the content data, and hence are extracted by the insufficient item extracting means 18. The survey of the omitted items are requested to the manufacturer of the product on another occasion.

In the prior art, a survey has been requested to the manufacturer even for survey items which can be calculated and evaluated from the content data solely of the component substances. In contrast, by using Embodiment 8 , items which can be inferred and calculated from the content data of the component substances are calculated automatically, whereby the number of survey items is reduced, and then the survey is requested to the manufacturer. This reduces the survey burden to the manufacturer.

### [Embodiment 9]

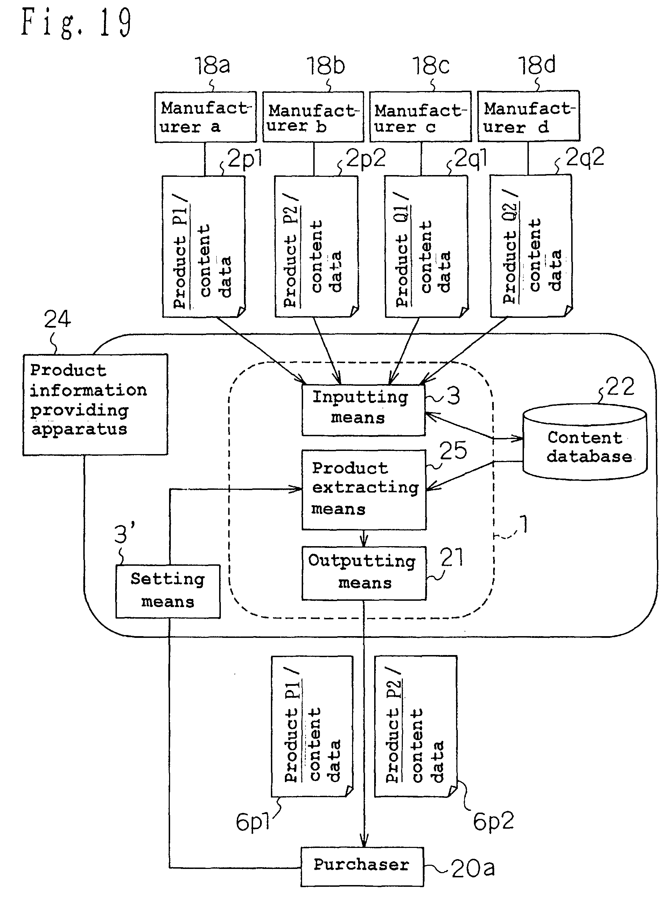

The configuration of a product information providing system according to Embodiment 9 of the invention is described below with reference to Figure 19. With respect to a product P1 fabricated by a manufacturer 18a, a product P2 fabricated by a manufacturer 18b, a product Q1 fabricated by a manufacturer 18c, and a product Q2 fabricated by a manufacturer 18d, content data 2p1, 2p2, 2q1, 2q2, respectively, are sent to a product information providing apparatus 24. Each content data is inputted through the inputting means 3. The product information providing apparatus 24 comprises: a processing apparatus 1 including inputting means 3, product extracting means 5, and outputting means 21; and a content database 22. The product information providing apparatus 24 provides the content extracted data 6p1 and 6p2 of the product P1 and the product P2 which have the same product function desired by a purchaser 20a, that is, which have the same function, but distinct type, article number, name, and the like.

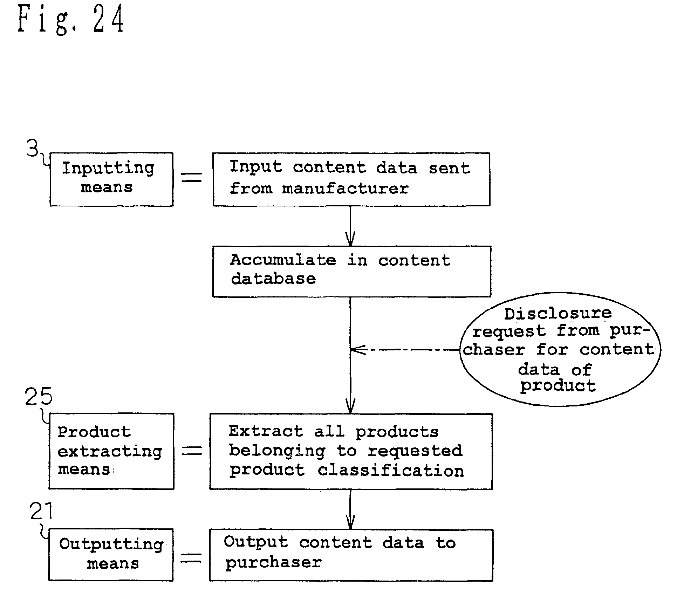

The operation of Embodiment 9 is described below with reference to Figure 24. All content data sent from the manufacturers a-d is inputted through the inputting means 3, and thereby accumulated in the content database 22.

Then, using the setting means 3', the purchaser 20a sets a specific product classification for the survey target. In response to the setting, a disclosure request for the content data of the products belonging to the above-mentioned specific product classification is issued to the product extracting means 25. The product extracting means 25 extracts the content data of all products belonging to the requested product classification, from the content database 22. Then, the content data of the extracted products is outputted through the outputting means 21 to the purchaser 20a having issued the disclosure request. In the figure, content data 6p1 and 6p2 is outputted respectively for the products p1 and p2 belonging to the product classification.

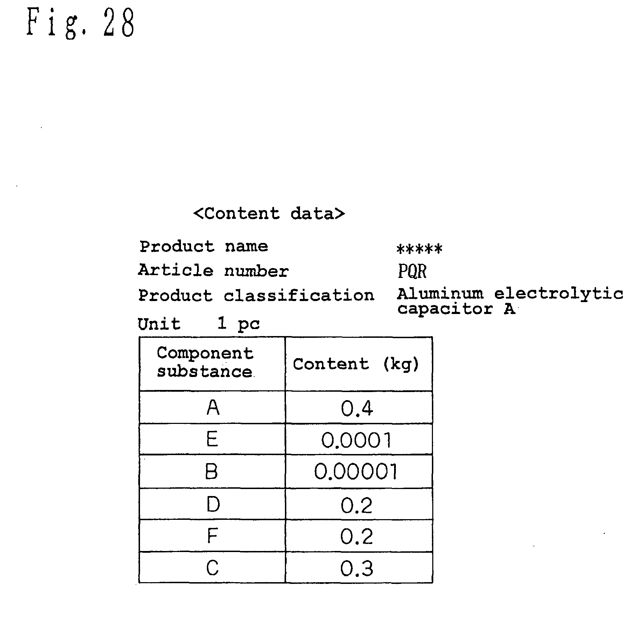

Figure 28 shows an example of the content data used in Embodiment 9. The product classification is an aluminum electrolytic capacitor having a specification, and classified into "Aluminum electrolytic capacitor A".

In the description of Figures 19 and 24, the content data has been disclosed to the purchaser 20a. However, the invention includes also a configuration similar to Embodiment 5 that substance code imparting means and substance code extracting means are added to the processing apparatus 1, that a substance code master and a survey target master are searched, and that content extracted data is disclosed depending on the subject matter of the request from a purchaser. The items of the product classification are defined according to materials, funetions, performance, and the like. For example, television receivers which are end products can be classified according to the screen size.

In the configuration according to Embodiment 9, the content data of products belonging to a classification target among the product classifications desired by the purchaser is outputted to the purchaser as a whole. Accordingly, the purchaser can use the content data as a criterion for determining a product which has small environmental burden and hence is to be purchasedby oneself.

Further, the following operation may be performed using the product classification. With respect to a predetermined product classification, a survey target exclusion substance relevant to this is set. The survey target exclusion substance indicates a substance which is a target substance B contained in a predetermined product A but is not a target of content data acquisition by the product extracting means 25.

From the content database 22, in addition to the ordinary content extracted data, the product extracting means 25 can extract content extracted data in which the name and the content of the survey target exclusion substance is extracted.

An exemplary case that the survey target exclusion substance needs to be specified is that in a company promoting the avoidance of use of products and parts using hazardous substances, a specific product or part is to be excluded from the avoidance of use of hazardous substances. Survey target exclusion substance excluding means according to the invention can easily aggregate the amount of survey target exclusion substances contained in a predetermined product classification. An exemplary case is that in spite of on-going avoidance of use of products and parts using lead, lead in a cathode ray tube serving as the above-mentioned predetermined product is specified as a survey target exclusion substance, and hence permitted to be used. In this case, when the amounts of survey target substances in a secondary product composed of a plurality of products are aggregated, the amount of use of lead used in the secondary product can be aggregated separately into the amount of use of lead of avoidance target and the amount of lead which is used in the CRT and hence is excluded from the avoidance target.

The combination between a predetermined product classification name and a predetermined survey target exclusion substance name can be changed depending on the country to which the product having the predetermined product classification name is exported. For example, in case that lead contained in television receivers is a usage prohibition target in C country, but that lead is not a usage prohibition target in D country, lead can be specified as a survey target substance in television receivers to be exported to C country, whereas lead can be specified as a survey target exclusion substance in television receivers to be exported to D country.

### [Embodiment 10]

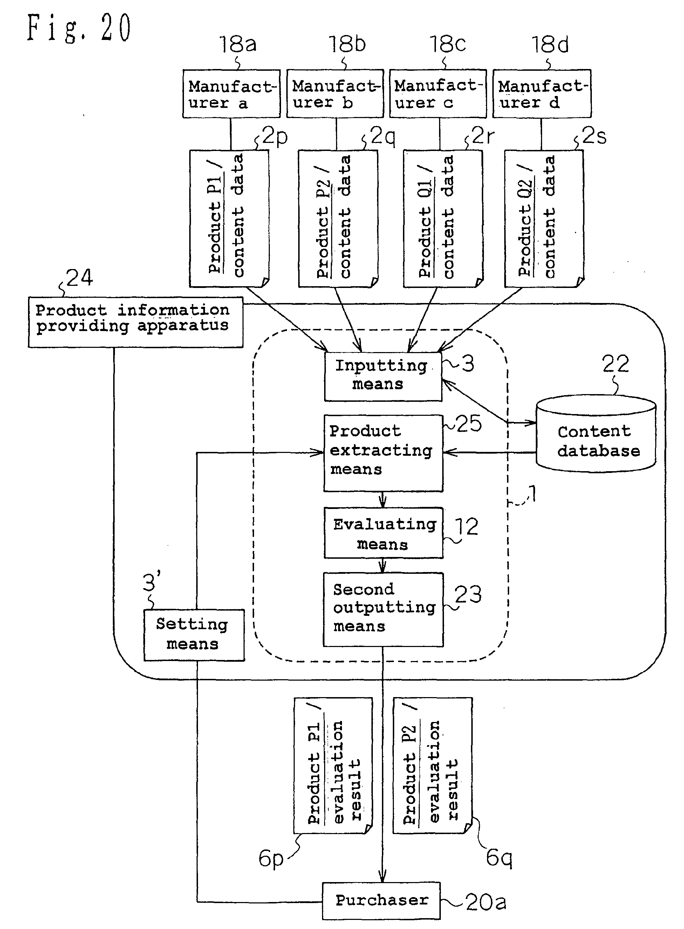

The configuration of a product information providing system according to Embodiment 6 of the invention is described below with reference to Figure 20. The present embodiment is different from Embodiment 9 shown in Figure 19 in the point that evaluating means 12 is added and that second outputting means 23 is provided in place of the outputting means 21.

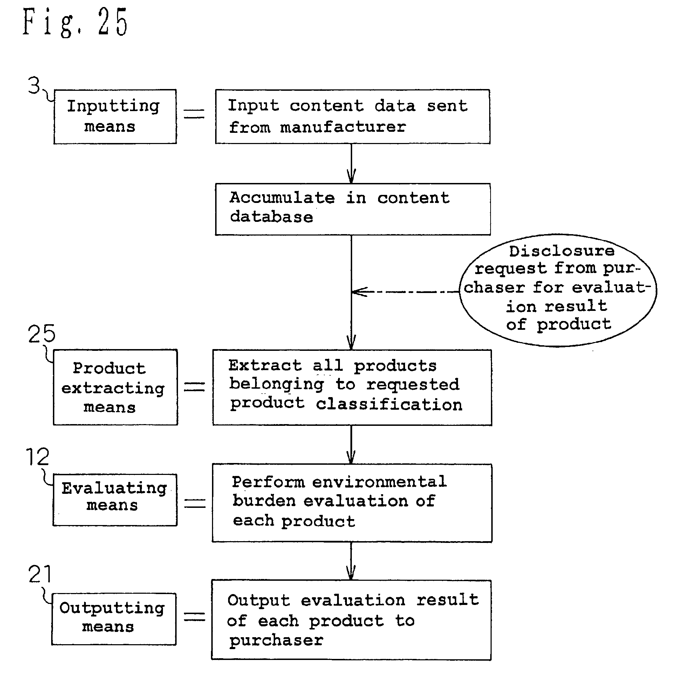

The operation of Embodiment 10 is described below with reference to Figure 25. Similarly to Embodiment 9, content data sent from the manufacturers 18a-18d is inputted through the inputtingmeans 3, and thereby accumulated in the content database 22.

Then, using the setting means 3', the purchaser 20a sets a specific product classification for the survey target. In response to the setting, a disclosure request for the content data of the products belonging to the above-mentioned specific product classification is issued to the product extracting means 25. The product extracting means 25 extracts the content data of all products belonging to the requested product classification, from the content database 22. Then, similarly to Embodiments 2 and 6, using the content data of the extracted products, the evaluating means 12 evaluates the environmental burden of each product. The evaluation result of each product is outputted through the second outputting means 23 to the purchaser 20a. In the embodiment of the invention, in addition to the evaluation results 6p and 6q of the survey target product, the content data of the products may be outputted simultaneously.

In the configuration according to Embodiment 10, the evaluation result relating to environmental burden of the products belonging to a classification target among the product classifications desired by the purchaser is outputted to the purchaser as a whole. Accordingly, the purchaser can use the evaluation result as a criterion for determining a product to be purchased by oneself.

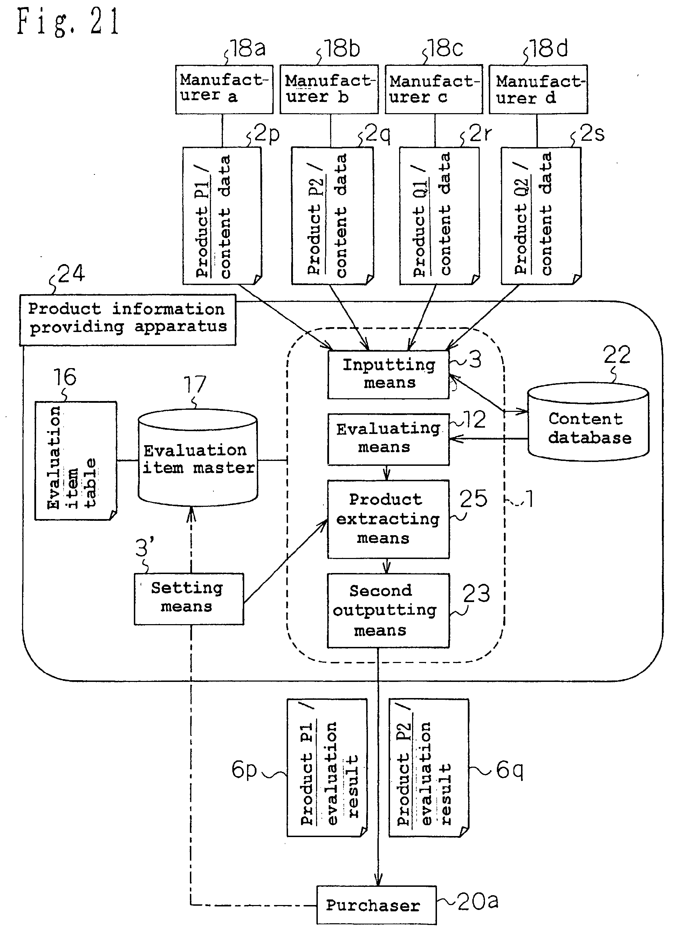

Further, as shown in Figure 21, the system comprises the evaluation item master 17, while the purchaser 20a performs setting operation through the setting means 3', and thereby stores an evaluation item table 16 prescribed individually, into the evaluation item master 17. Accordingly, the evaluation of environmental burden in the evaluating means 24 can be performed with respect to the purchaser's individual evaluation items.

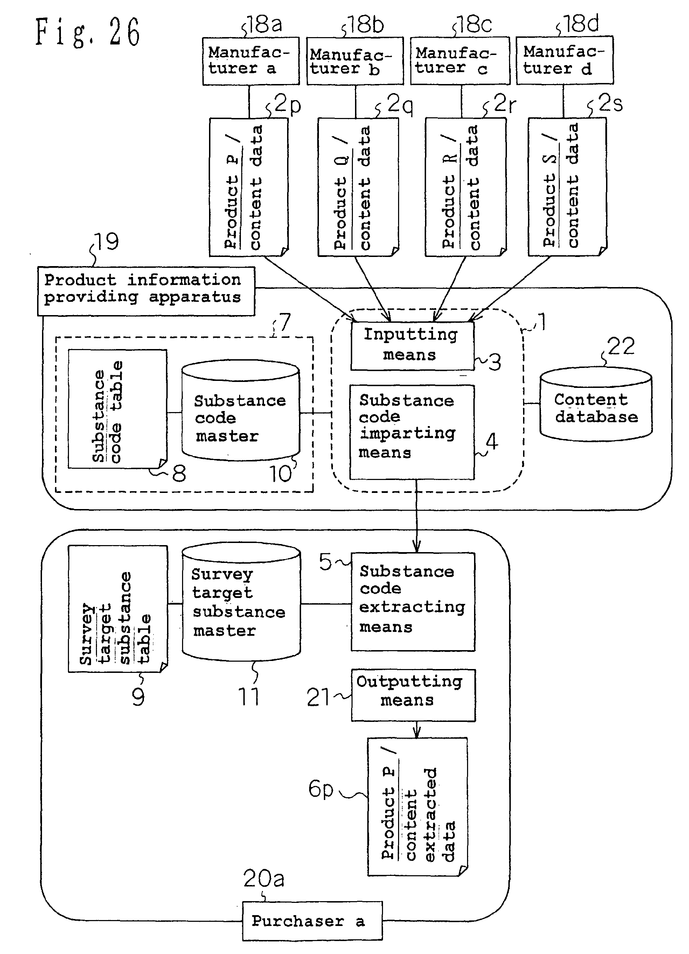

The product information providing system according to Embodiments 5-9 is preferably operated by a manager of the product information providing apparatus 19 and 24. In Figure 26, the inputting means 3 and the substance code imparting means 4 have been installed in the product information providing apparatus, while the substance code extracting means 5 and the outputting means 21 have been installed in the purchaser 20a. In contrast, in the configuration shown in Figure 20 or 21 according to the invention, each purchaser does not need to provide the substance code extracting means and the outputting means, while the substance code extractingmeans and the outputting means are operated as a whole in the product information providing apparatus. This permits an advantageously efficient system. Further, in the configuration shown in Figure 26, the purchasers who can receive information from the product information providing apparatus are limited to those who having substance code extracting means and outputting means. Thus, this system is not efficient.

In the configuration of the inputtingmeans 3 , provided is input support means in which when a substance name is to be inputted as content data and when a part of characters of the substance name is inputted, a list of substance names including these characters is displayed, whereby a substance name to be inputted is selected from the substance name list. This reduces the burden in inputting of the substance name. For example, when "manganese dioxide" is to be inputted for the content data, and when "dioxide" is inputted, a substance name list, such as cerium dioxide, gallium dioxide, lead dioxide, manganese dioxide, ..., is displayed. The inputting person can select "manganese dioxide" among these.

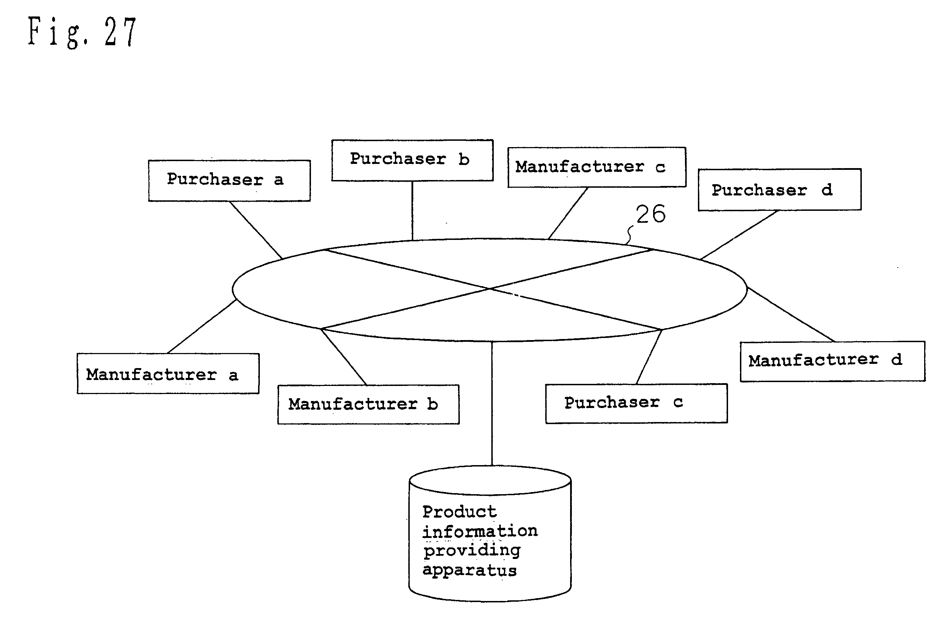

As shown in Figure 27, in the product information providing system according to the invention, a product information providing apparatus which comprises a processing apparatus including substance code imparting means and substance code extracting means is connected through a network to a plurality of manufacturers and purchasers. This permits efficient information exchange and hence an efficient system.

In the product survey system and the product information providing system according to the invention, the content data of the product has been inputted through the inputting means. However, in addition to the content data, information relating to the product may be inputted. This permits a wider product survey. Information other than the content data includes the form of a check sheet used for checking the evaluation items of the product, and other various information. Further, when information on the factory having fabricated the product is treated together with the content data, a wider product survey is available. Such information includes: the amount of input energy and/or the amount of environmental release to any one of the atmosphere, the water, the soil, and the solid waste, with respect to the entirety of the factory having fabricated the product; and the amount of input energy and/or the amount of environmental release to any one of the atmosphere, the water, the soil, and the solid waste, when one unit of the product is fabricated.

In the above-mentioned embodiments, a disclosure condition may be set in the content database 22, whereby the outputting means 21 or the second outputting means 23 may restrict the subj ect matter of the output of the content data depending on the disclosure condition. The disclosure condition in this configuration indicates, for example, a condition in which the seller of the manufacturer of a product restricts the subject matter of the output or the method of the output depending on the addressee (company or the like) of the output. For example, when the addressee of the output is a competitor company of the product seller, items to be maintained secret can be inhibited from being outputted in the output of the content data.

The content database 22 may include information on the name of the manufacturer who conducts the product survey or the name of the inputting person who conducts the survey and inputs the content data. whereby the outputting means may inquire the inputting person whether the content extracted data may be disclosed. When the inputting person permits disclosure, the content extracted data is outputted. Here, the inputting person corresponds to a provider who provides product substance information according to the invention.

The manager of the product information providing apparatus 19 may set a disclosure condition depending on the level of the usage charge of the apparatus. As a result, content extracted data having a larger amount of information can be assigned to a higher financial value.

In Embodiments 1-10, the substance code master 10 and the survey target substance master 11 correspond to a product substance information database according to the invention. The inputting means 3 corresponds to inputting means according to the invention, and includes input support means according to the invention. The setting means 3' corresponds to product substance information setting means according to the invention. The content data 2 corresponds to product substance information according to the invention. The component substance corresponds to a substance contained in a product according to the invention. The outputting means 21 and the second outputting means 21 include restricted outputting means according to the invention. The evaluating means 12 corresponds to environmental burden evaluating means according to the invention.

In the description of Embodiments 1-10, substance codes have been assigned to the substance names in the content data. However, the use of element symbols, chemical formulas, structural formulas, CAS numbers, or the like may be agreed in advance, whereby data input may be performed using these. In this case, the substance code master and the substance code imparting means can be omitted, whereby the content data can be searched directly.

### [Embodiment 11]

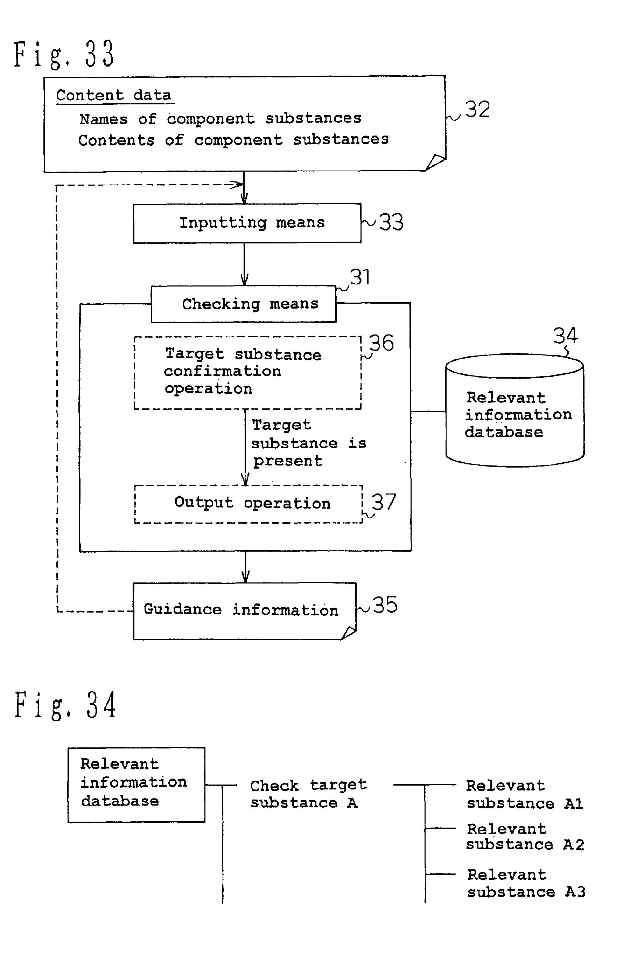

The configuration of a product survey system according to Embodiment 11 of the invention is described below with reference to Figure 33. The product survey system according to the invention comprises inputting means 33, checking means 31, and a relevant information database 34. The relevant information database 34 is means of storing substance relevant information containing at least the names of substances highly relevant to each other with reference to a predetermined criterion, in the substance names of check target substances and relevant substances.

The operation of product survey system according to Embodiment 11 is described below. At the same time, described is an information setting check method according to an embodiment of the invention. Content data 32 including the names of component substances and the contents of the component substances is inputted through the inputting means 33. With referring to the relevant information database 34, the checking means 31 performs target substance confirmation operation 36 for confirming whether the name of a check target substance is included in the names of the component substances inputted through the inputting means 33.

As a result of the confirmation operation, when the name of a check target substance is included in the names of the component substances , the name of a relevant substance relevant to the check target substance is outputted as guidance information, from the relevant information database 34 in output operation 37. The outputted guidance information 35 is fed back to the inputting means 33 when necessary, and thereby provided as information on the input operation of the content data, to the inputting person of the content data 32.

For example, the component substances of a product are inputted one by one through the inputting means 33, whereby the checking means 31 operates at each time, and then the name of a relevant substance relevant to the component substances is outputted as guidance information 35 after the input through the checking means 31. This permits easy recognition of the name of the substance to be inputted next.

Alternatively, in the invention, a series of content data of the component substances relevant to a product may be inputted as a whole, and then the check operation may be performed by the checking means 31. In this case, the names of the relevant substances relevant to the inputted component substances are outputted as guidance information 35 as a whole. On the basis of the guidance information 35, it can be checked whether there is any missing input in the content data inputted as a whole.

In general, the survey of a product using a large number of substances requires the knowledge of chemistry and a large burden. However, in the present embodiment, considerable efforts have been directed in accurate survey of the substances used in a product. As a result, attention is focused on the fact that the substances used in a product are not completely arbitrarily used, and that these substances are relevant to each other to an extent. This has resulted in the invention. More specifically, in response to the inputting of a substance A used in a product, a group of substances highly relevant to the substance A is searched for in a relevant information database prepared in advance, and then displayed. This permits efficient recognition of the names of substances other than the substance A used in the product, and thereby improves the workability in inputting.

In addition to the inputting of the names and the contents of the component substances, the data inputted through the inputting means 33 may include the date of data generation, the article number and the name of the survey target product, the name of the manufacturer, the name of the provider, the material safety data sheet (MSDS) number, and the purpose of usage (such as packaging, washing, and electronic components), and the like. The form of the content data may be electronic information, or alternatively, information recorded in a substance medium such as a paper sheet, and is not limited specifically. However, from the viewpoint of easy handling of the data, it is preferable that the content data is in the form of electronic information. The inputting means may be a keyboard, a voice, or a scanner for reading information in a paper sheet, and is not limited specifically.

The check target substance according to the present embodiment indicates a target substance used when the checking means 31 checks the content data 32, and is set in advance depending on the subject matter of the survey.

The relevant substance according to the present embodiment indicates any substance relevant to a check target substance, and is not limited specifically. The relevant substance is selected with considering the purpose, the importance, and the like in the survey. For example, hazardous substances relevant to a check target substance may be selected solely as relevant substances.

The relevant information database 34 according to the present embodiment stores relevant information on the names of predetermined check target substances. As shown in Figure 34, the relevant information includes at least information in which the names of relevant substances are corresponded to the name of a substance.

A plurality of relevant information databases may be present. For example, when a relevant information database is constructed individually for each user of the content data, information desired by the user can be included in each relevant information database. By virtue of this, the manufacturer can refer to the relevant information database corresponding to the user of the content data, thereby prepare content data, and then provide appropriate information desired by each user.

The combination between a check target substance and relevant substances in the relevant information database 34 according to the present embodiment may be set on the basis of a predetermined criterion. The criterion used is the combinations between substances used in combination generally. Check target substances and relevant substances are set appropriately depending on the purpose of the survey. In particular, when those substances are set with reference to the product, compared with major component materials used in the products, since additives and processing agents are contained only in a small amount, the inputting of these substances are missed frequently. Accordingly, these substances need to be considered are preferably registered as relevant substances without omission. For example, self-imposed control target substances prescribed in a company or an industry and legislative control target substances maybe set as relevant substances.

The combinations between a check target substance and relevant substances include: polyvinyl chloride / various phthalic acid plasticizers; bromine flame retardant / antimony trioxide; stainless steel / chromium, nickel, or manganese; semiconductor material / arsenic; and other various combinations depending on the purpose of survey. For example, when bromine flame retardants in a resin need to be mainly checked by the checking means, various resins are set as check target substances , while the kinds of bromine flame retardants to be considered are set as relevant substances. Then, when the name of a resin is inputted, the names of bromine flame retardants are outputted as guidance information. Further, in the combinations between a check target substance and relevant substances in the relevant information database according to the present embodiment, a substance non-intentionally contained in the product may be set as a relevant substance, for example, in a case that a check target substance generates another compound due to a chemical reaction during the fabrication of a product, or that un-reacted raw material during the fabrication of a product remains in the product. An example of this is the case that the check target substance is polystyrene, and that the relevant substances are styrene monomer, styrene dimmer, and the like. Another example is the case that the check target substance is phenol-formaldehyde resin, and the relevant substance is un-reacted formaldehyde.

In the above-mentioned description, check target substances have been denoted by substance names (such as "iron"). However, check target substances do not need to be denoted as substances themselves, and may be defined by general material names (such as "surface finished steel plate"), part names (such as "paste"), component names, product names (such as "printed circuit board").

Such combinations between a check target substance and relevant substances include: steel material / chromium; plated component / nickel; surface finished steel plate / chromium; paste / cadmium; anticorrosive / chromium(VI) ; paint / zinc oxide; switch / cadmium; ceramic / lead titanate ; and electrode relevant component / indium. As such, combinations between a material or component desired to be managed as a check target substance and relevant substances contained therein are set.

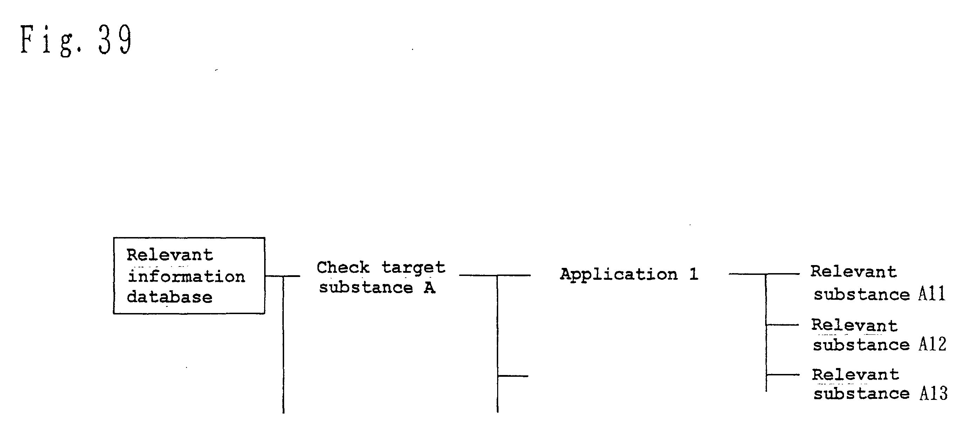

Embodiment 11 is not limited to the case shown in Figure 34 where check target substances and relevant substances are solely stored in the database. For example, as shown in Figure 39, the names of applications and forms of the substance may be included in a hierarchy under the check target substance. In this case, the name of the product, the names of applications and forms , and the names of relevant substances are outputted as the guidance information from the outputting means. In a product survey, when the names of applications and forms of the substance are more easily understood than the name of the substance itself, this approach permits easy identification of relevant substances.

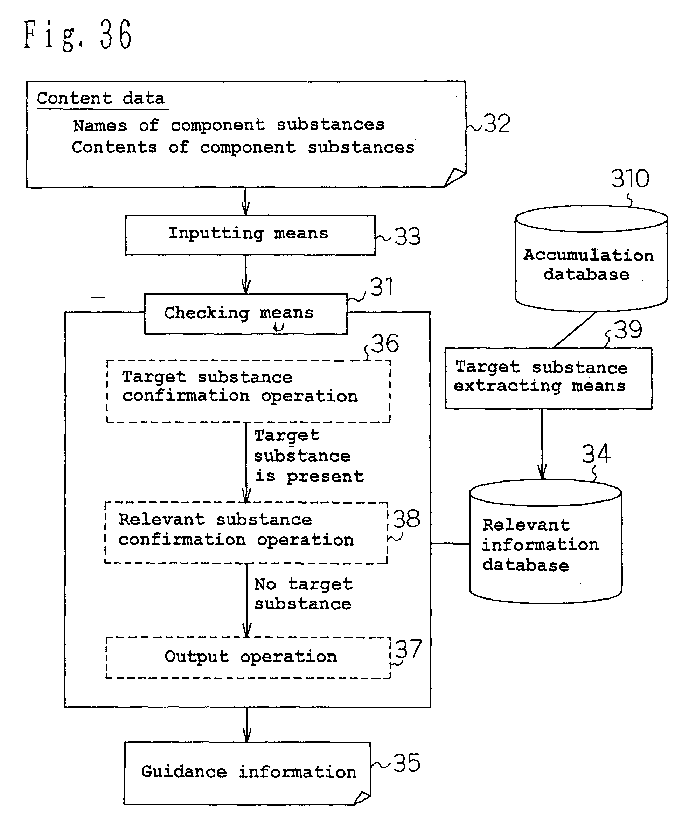

In the present embodiment, in order to collect information in which the names of relevant substances relevant to a check target substance are corresponded to the name of the check target substance, an accumulation database for accumulating the contents on a product basis may be provided as shown in Figure 36. Then, the existence number of combinations between the names of component substances for each product in the accumulation database is aggregated, whereby combinations between the names of component substances in which the existence number of combinations exceeds a predetermined number are extracted and used as the information in which the names of relevant substances relevant to a check target substance are corresponded to the name of the check target substance. By virtue of this, on the basis of the accumulated data, combinations having high relevance between component substances can be selected. By virtue of this extraction operation from the accumulation database, the data of combinations between a check target substance and relevant substances highly relevant to the target product group is easily constructed, whereby useful guidance information is outputted in the output operation.

In the target substance confirmation operation according to the present embodiment, with referring to the relevant information database, it is checked whether the name of a check target substance is included in the names of component substances in the content data.

Further, the target substance confirmation operation may be performed only for check target substances in which the component substance has a content percentage not below a predetermined value in the product. In case that the target is a product containing small amounts of additives and finishing agents within the major component materials, when the contents to be considered are restricted to those not below a predetermined value, the easily recognizable major component substances solely are considered as check target substances, while general additives and finishing agents of small amounts are extracted as relevant substances. This permits advantageously efficient survey.

The guidance information according to Embodiment 11 indicates information including at least the names of the relevant substances. The guidance information can be used as candidates for the names of the component substances when the names of the component substances are inputted through the inputting means 33.

In the output operation 37 according to the present embodiment, the guidance information derived from the result of the checking means 31 using the relevant information is outputted. The form of outputting may be screen display, voice output, electronic information, or a hard copy, and is not limited specifically.

### [Embodiment 12]

Embodiment 12 is different from the configuration of Embodiment 11 in the point that relevant substance confirmation operation 38 in the checkingmeans 31 is added.

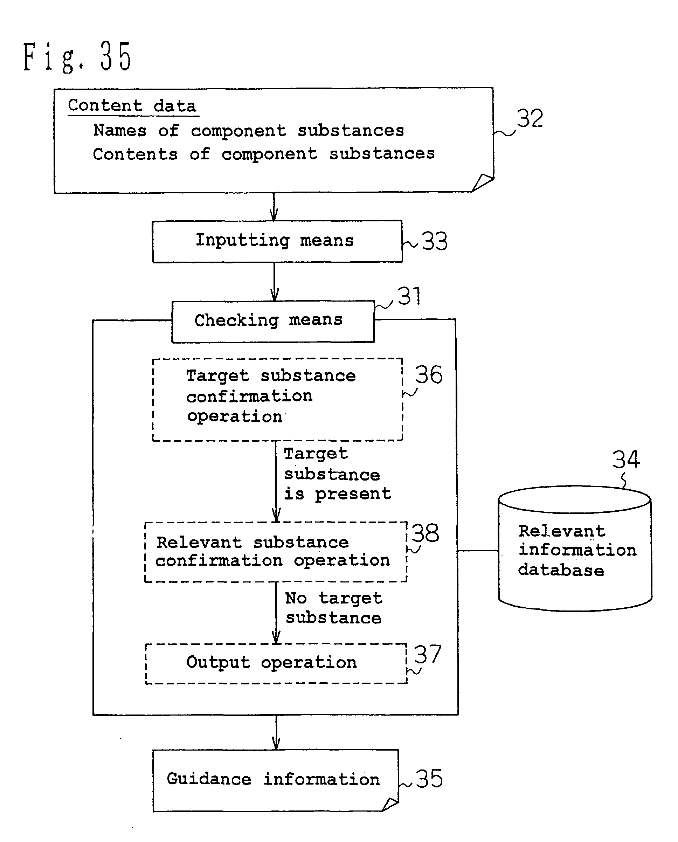

The configuration of Embodiment 12 is described below with reference to Figure 35. A product survey system according to the invention comprises inputting means 33, checking means 31, and a relevant information database 34.

The operation of Embodiment 12 is described below. Description of like points to Embodiment 11 is omitted, while different points solely are described.

The checking means 31 performs target substance confirmation operation 6 for confirming whether the name of a check target substance is included in the names of the component substances inputted through the inputting means 33. When the name of a check target substance is included, with referring to the relevant information database 34, the checking means 31 performs relevant substance confirmation operation 38 for confirming whether the name of a relevant substance is included in the names of the component substances inputted through the inputting means 33.

In the relevant substance confirmation operation 38, when it has been confirmed that no relevant substance is included, at least the names of the relevant substances are outputted as guidance information in the output operation 37.

In Embodiment 12, after a series of input operation through the inputting means 33, guidance information is provided for checking imperfection in the inputted content data. At that time, the content data 32 for all the component substances in the product may be inputted through the inputting means 33, and after the completion of all input operations, the checking means 31 may perform the check operation. Alternatively, the check operation may be performed after the completion of inputting of the content data of a certain unit which is a part of the component substances of the product.

In general, checking of imperfection in the subject matter of the survey result of a product using a large number of substances requires the knowledge of chemistry and a large burden. However, in Embodiment 12, considerable efforts have been directed in accurate survey of the substances used in a product. As a result, attention is focused on the fact that the substances used in a product are not completely arbitrarily used, and that these substances are relevant to each other to an extent. This has resulted in the invention. More specifically, in checking of imperfection in a series of inputted content data, whether a substance group highly relevant to a substanceAused in the product is inputtedwithin the content data is searched from a database prepared in advance, and thereby displayed. When the relevant substance group is not inputted, it is supposed that the inputting of a substance within the substance group could have been missed. Then, a prompt is outputted such as to request a confirmation whether the substance group is actually not included in the product. This permits efficient checking of a possibility of imperfection in the inputting of the substances used in the product.

The guidance information according to Embodiment 12 is outputted when in the relevant substance confirmation operation, it has been confirmed that the names of the relevant substances corresponding to a check target substance are not included within the names of the inputted component substances. This information, for example, requests a reconfirmation whether the relevant substances are actually not included in the product.

### [Embodiment 13]

Embodiment 13 is different from the configuration of Embodiment 12 in the point that content percentage confirmation operation 311 in the checkingmeans 31 is added.

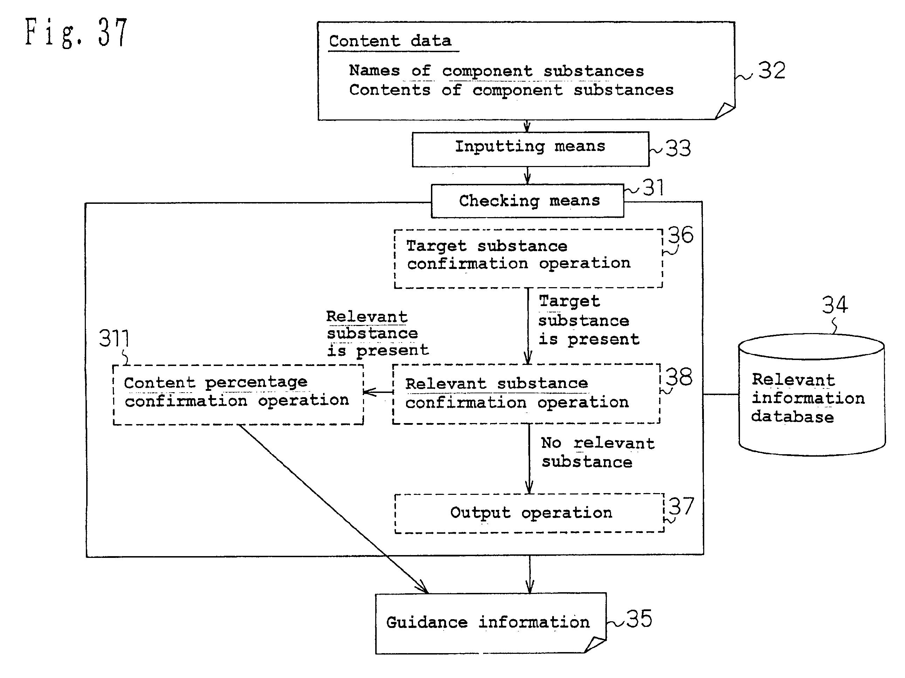

The configuration of Embodiment 13 is shown in Figure 37. Like or corresponding parts to Figure 33 are designated by like numerals, and hence detailed description is omitted.

The operation of Embodiment 13 is described below with reference to Figure 37. Description of like points to Embodiment 12 is omitted, while different points solely are described. The checking means 31 performs relevant substance confirmation operation 38. When it has been confirmed that the name of a check target substance is included in the inputted content data 32 and that a relevant substance is included, the checking means 31 performs content percentage confirmation operation 311 for confirming whether the content percentage of the relevant substance described in the content data 32 falls within a predetermined content percentage range of the relevant substance stored in advance in the relevant information database 34. Guidance information 35 corresponding to the confirmation result is outputted in the output operation 37.

In the present embodiment, the setting of the content percentage range data stored in the relevant information database 34 may be conducted using general literature data and the like. Alternatively, the setting may be conducted on the basis of the accumulated data of the previous results of product survey.

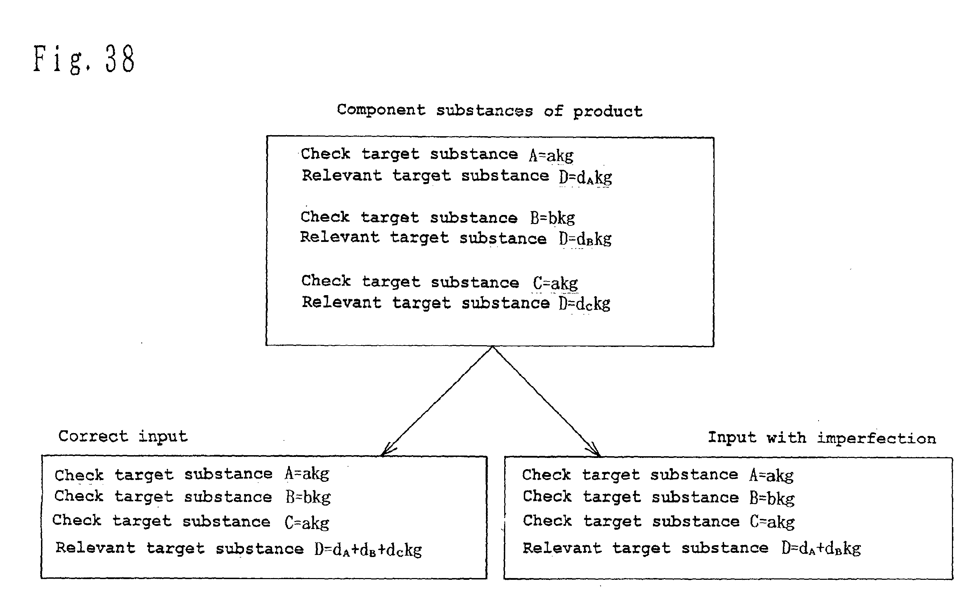

In the content percentage confirmation operation 311 according to Embodiment 13, even when the name of a relevant substance corresponding to a check target substance is inputted, the content percentage of the relevant substance is checked, whereby a possibility of imperfection is revealed. For example, as shown in Figure 38, it is assumed that the relevant substance corresponding to check target substances A, B, and C is a relevant substance D in common, and that the total of the contents of the respective relevant substances D is calculated as the content data 32. In this case, even when imperfection occurs in a part of the data (that is, missing description of the relevant substance D corresponding to a check target substance in Figure 6) , the imperfection is not extracted in the relevant substance confirmation operation solely. In contrast, in Embodiment 13, in the content percentage confirmation operation, it is confirmed whether the inputted content (the value of dA+dB in Figure 6) falls within the content percentage range stored in advance in the relevant information database 34. When the value falls outside the range, a possibility of imperfection in the description is outputted. The values of the content percentage range may be set on the basis of generally known findings. Alternatively, the data may be prepared on the basis of individual survey.

In addition to information for checking imperfection such as missing description of the name of a component substance in the inputted content data, the guidance information 35 outputted in Embodiment 13 includes information for checking imperfection in the content percentage in the inputted content data on the basis of the result of the content percentage confirmation operation 311.

In the present embodiment, the target substance confirmation operation 311 may be performed only for target substances in which the component substance has a content percentage not below a predetermined value relative to the product. This permits checking of simple 'description errors (for example, a description "110%") in the content percentages in the inputting of the content data 32. Other than the value of 100%, the setting of the content percentage used for checking may be a value depending on the component substance.

In the present embodiment, in addition to the operation of supporting the input of the names of the purchased substances and the operation of indicating a possibility of imperfection in description of the names and the contents of the purchased substances, the operation of checking a missing description in a predetermined item may be added in the product survey system according to the present embodiment.

Further, the following configurations maybe adopted.

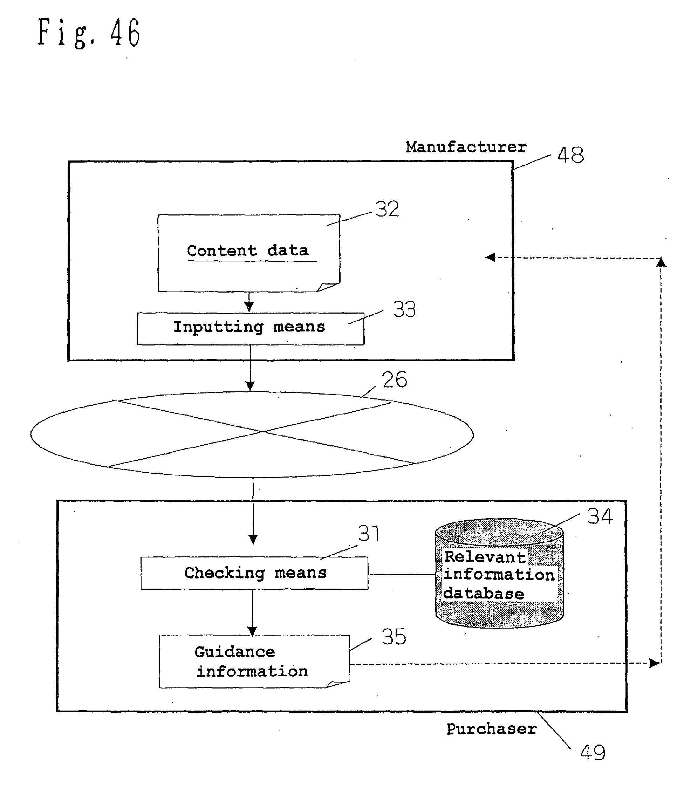

In Figure 46, a manufacturer 48 has inputting means 33, while a purchaser 49 using the content data has checking means 31. In this case, the manufacturer 48 inputs a series of content data 32 of a product through the inputting means 33, and then transmits the data through a network 26 or the like to the purchaser 49. The purchaser 49 checks the transmitted content data 32 using the checking means 31, and when necessary, notifies guidance information 35 whether there is a possibility of imperfection in the survey result, to the manufacturer. The user can use the finally obtained content data for the purpose of product evaluation and green procurement activities.

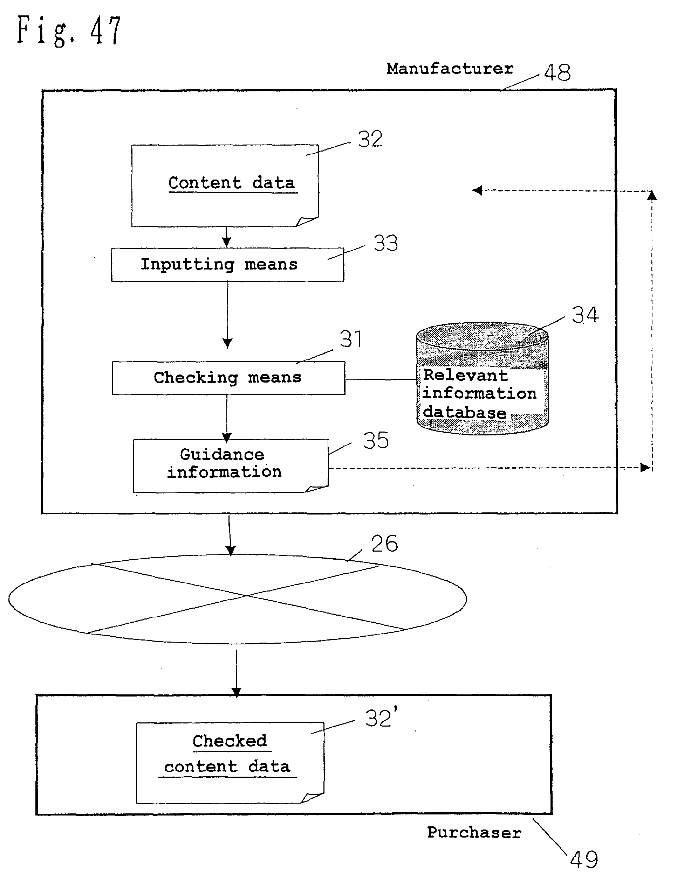

In Figure 47, a manufacturer 48 has inputting means 33 and checking means 31. In this configuration, the manufacturer 48 inputs the substances of a product one by one through the inputting means 33. At each time, the checking means 31 outputs the name of the substance as guidance information 35. This permits easy inputting of the substances. The user can use the finally checked content data 32' for the purpose of product evaluation and green procurement activities.

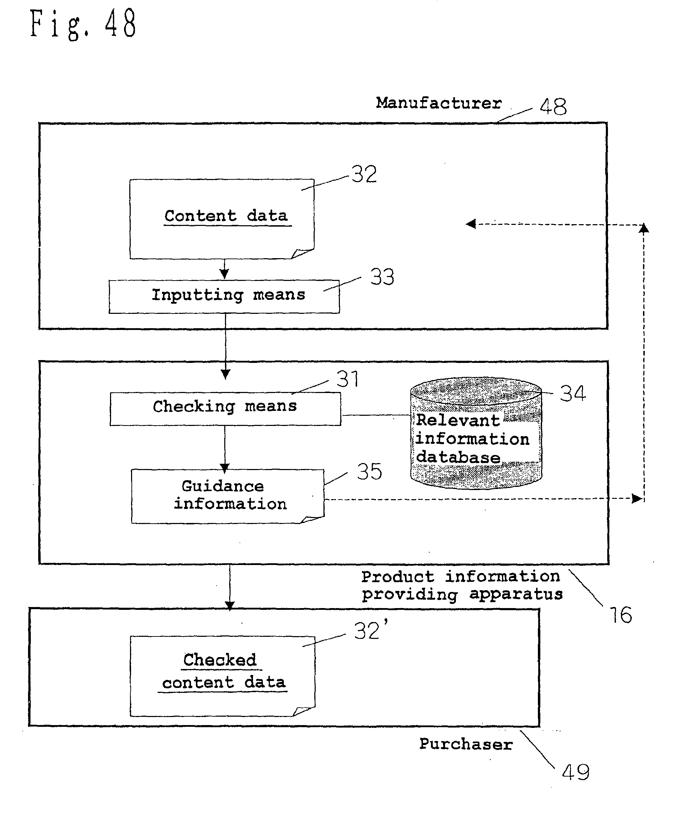

In Figure 48, a manufacturer 48 has inputting means 33, while a product informationproviding apparatus 19 which is operated and managed independently from the manufacturer 48 and a purchaser 49 using the content data has checking means 31. The checking means 31 checks the content data 32 transmitted from the manufacturer 48, and when necessary, outputs guidance information 35 to the manufacturer 48. The purchaser 49 can obtain the finally checked content data 32' from the product information providing apparatus 19, and thereby use the data for the purpose of product evaluation and green procurement activities.

In the product survey system according to the present embodiment, both of the inputting means and the checking means may be in the manufacturer of the product or the purchaser of the product. Alternatively, the inputting means may be in the manufacturer of the product, while the checking means may be in the purchaser of the product. When the purchaser of the product implements the present embodiment, the content data to be inputted may be the names of the component substances solely.

### [Example 1]

A product survey was conducted for the case that the product was a copper-clad laminate sheet.

Epoxy resin which is a component substance of the product was inputted as content data through the inputting means. Immediately after that, the inputted data was checked with the checking means. As a result, tetrabromo bisphenol A, tetrabromo phthalic anhydride, and decabromo diphenyl were outputted as guidance information 35. By referring to the guidance information, tetrabromo bisphenol A was easily identified and inputted as the next component substance in the product.

### [Example2]

A product survey was conducted for the case that the product was an IC component.

Epoxy resin which is a component substance of the product was inputted as content data 32 through the inputting means 33. Immediately after that, the inputted data was checked with the checking means 31. As a result, three items of IC encapsulant, printed circuit board material, and the other were outputted as guidance information 35. Then, detail of the IC encapsulant relevant to the survey target IC component was checked. As a result, tetrabromo bisphenol A, tetrabromo phthalic anhydride, and decabromo diphenyl were outputted. By referring to the guidance information, tetrabromo bisphenol A was easily identified and inputted as the next component substance in the product.

### [Example 3]

A product survey was conducted for the case that the product was a mechanical component.

The survey result of the content data 32 indicating iron 0.5 kg, aluminum 0.3 kg, and polyvinyl chloride 0.2 kg was obtained from the provider of the product. Then, the content data was inputted through the inputting means 33, and then check operation was performed by the checking means 31. First, in the target substance confirmation operation, the name of polyvinyl chloride was confirmed as a check target substance. Then, the name of isobutyl phthalate which is a relevant substance of polyvinyl chloride was searched for, but was not present in the content data. Accordingly, a message "Please confirm whether isobutyl phthalate is not present" was displayed as guidance information 35 in the output operation 37. Thus, the confirmation whether isobutyl phthalate is not contained in the product was inquired to the provider of the product. As a result, it was found that the inputting of isobutyl phthalate hadbeenmissed due to imperfection in the provider, whereby the content data was corrected.

### [Example 4]

A product survey was conducted for the case that the product was a composite component comprising a plurality of printed circuit boards.

The content data 32 indicating epoxy resin 20 g, glass 20 g, phenol resin 30 g, paper 30, and tetrabromo bisphenol A 1g was obtained as a result of survey. Then, the content data 32 was inputted through the inputting means 33, and then check operation was performed by the checking means 31. First, in the target substance confirmation operation 36, the names of epoxy resin and phenol resin were confirmed as check target substances. Then, the name of tetrabromo bisphenol A which is a relevant substance of epoxy resin and phenol resin was searched for. As a result, the name of tetrabromo bisphenol A was included in the content data. Accordingly, the content percentage confirmation operation 311 was conducted. The content percentage confirmation operation 311 was conducted using a value of "3% or more" as the content percentage range of tetrabromo bisphenol A relative to the epoxy resin or the phenol resin. In the content percentage confirmation operation 311, the content percentage of the content 1 g of tetrabromo bisphenol A relative to the total content 50 g of epoxy resin and phenol resin was calculated from the obtained content data, and thereby found to be 2%. This value falls outside the content percentage range, whereby a message "There is a possibility of input imperfection in the content data of tetrabromo bisphenol A" was displayed as guidance information 35 in the output operation 37. Thus, the survey result of the product was checked again. As a result, it was found that the content of tetrabromo bisphenol A added in the phenol resin had not been incorporated in the data, whereby the content data 32 was corrected.

### [Example 5]

From a predetermined accumulation database 310 storing the survey results of the content data of up to 100 products as shown in Figure 36, the target substance extracting means 39 aggregated the existence number of combinations of the names of the component substances for each percentage in the accumulation database. As a result, the existence number of the combination that the component substance is stainless steel and that the relevant substance is chromium was found to be large. Accordingly, the combination that the component substance is stainless steel and that the relevant substance is chromium was extracted. By virtue of this operation of the target substance extracting means 39, it was found that this combination had been used frequently in the products in the accumulated data. Thus, this combination was incorporated into the relevant information database 34, and thereby used in the operation of the checking means 31 in the subsequent product surveys.

### [Example 6]

A product survey was conducted for the case that the product was a semiconductor component.

The content data indicating aluminum 0.1%, gold 0.1%, lead 3%, antimony 3%, silicon 0.2%, copper 50%, and epoxy 43.5% was inputted through the inputting means. The target substance confirmation operation 36 in the checking means 31 was conducted only for check target substances having a content percentage not below 10% relative to the product. Meanwhile, all of these substances of aluminum, gold, lead, antimony, silicon, copper, and epoxy were registered as check target substances in the relevant information database. Accordingly, when the target substance confirmation operation 36 was conducted without setting of the content percentage, a large number of relevant substances were displayed as the guidance information 35. This caused a difficulty in recognizing of the names. In contrast, when the target substance confirmation operation 36 was conducted with the setting of the content percentage of 10%, the names of the relevant substances corresponding to the check target substances of copper and epoxy solely were displayed. This had reduced the number of relevant substances displayed as the guidance information 35, and permitted easy recognition of the relevant substances.

### [Example 7]

A product survey was conducted for the case that the product was a relay.

The survey result of the content data 32 indicating copper 50%, lead 22%, and glass 28 was obtained from the provider of the product. Then, the content data was inputted through the inputting means 33, and then check operation was performed by the checking means 31. First, the target substance confirmation operation 36 was conducted, whereby the name "relay" of the product was confirmed as a check target substance. Then, the substance name "cadmium" which is a relevant substance of "relay" was searched for, but was not present in the content data. Accordingly, a message "Please confirm whether cadmium is not present" was outputted as guidance information 35 in the output operation 37. In response to the guidance information 35, the confirmation whether cadmium is not contained in the product was inquired to the provider of the product. As a result, it was found that the inputting of cadmium into the survey result had been missed due to imperfection in the provider. Accordingly, the provider had corrected such that cadmium is included in the content data of the survey result.

In Embodiments 11-13, the product survey system corresponds to an information setting check apparatus according to the invention. The inputting means 33 corresponds to substance information setting means according to the invention. The relevant information database 34 corresponds to a relevant information database according to the invention. The checking means 31 corresponds to checking means and judging means according to the invention. The content data 32 corresponds to product substance information according to the invention. The component substance corresponds to a substance contained in a product according to the invention. The check target substance and the relevant substance correspond to product specification information or substance corresponded using the substance correspondence information. The relevant substance according to the embodiments corresponds to a relevant substance according to the invention.

### [Embodiment 14]

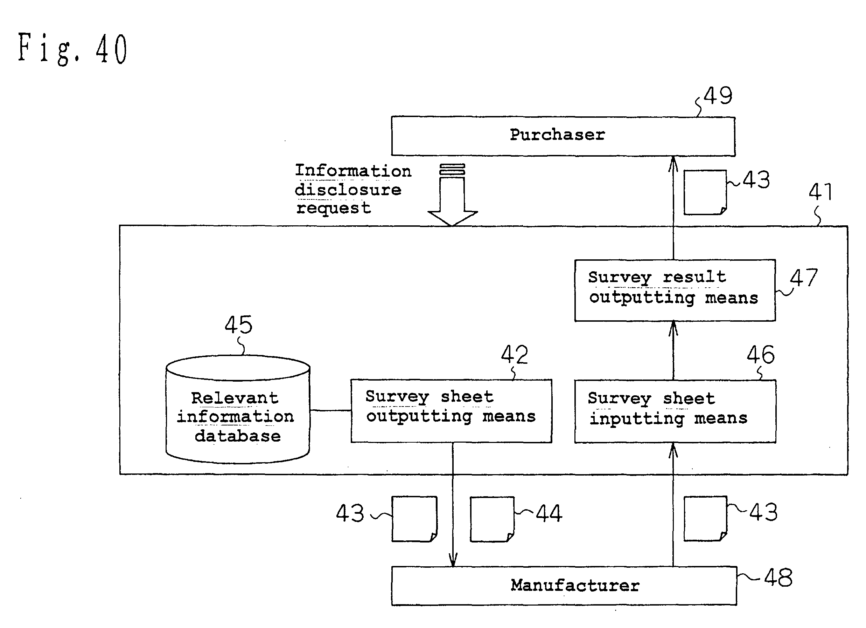

The configuration of a product information providing system according to Embodiment 14 of the invention is described below with reference to Figure 40. The product information providing system 41 according to the invention comprises survey sheet outputting means 42, a relevant information database 45, survey sheet inputting means 46, and survey result outputting means 47.

The operation of Embodiment 14 of the invention is described below. At the same time, described are a product relevant substance information providing method and a product survey support method according to an embodiment of the invention. A survey request for product information is inputted from a purchaser 49 of a product to the product information providing system 41. At that time, information, for example, of the name of a survey target product is inputted to the product information providing system 41. However, the product information according to the invention is not limited to a specific product name, and may be expressed by the type of the product, a general material name, a part name, a component name, and the like.

On receiving the product name, with referring to the relevant information database 45, the product information providing system 41 extracts the names of the relevant substances relevant to the survey target product as substances (at-survey care target substances) missing input of which needs to be cared at the survey of the product information, thereby generates an at-survey care target substance list 44. Then, the at-survey care target substance list 44 is attached to a survey sheet 3, and then the disclosure of product information is requested through the outputting means 42 to the manufacturer 48 of the product. The manufacturer 48 having received the disclosure request fills in the survey sheet 43 with the names of the component substances contained in the product and the contents of the component substances. At that time, since the manufacturer 48 refers to the attached at-survey care target substance list 44, the substances listed in the at-survey care target substance list 44 are surveyed most carefully. The filled-in survey sheet 43 is inputted through the survey sheet inputting means 46 to the product information providing system 41. After that, the survey sheet 43 is disclosed as the product information through the survey result outputting means 447 to the purchaser 49 of the product.

In Embodiment 14, as described above, after receiving a disclosure request for the product information from the purchaser 49, the manufacturer prepares a survey sheet 43 corresponding to the request. However, the invention is not limited to this flow shown in Embodiment 14. For example, a survey sheet 43 may be outputted in advance from the product information providing system 41 through the survey sheet outputting means 42. Then, the survey sheet 43 filled in by the manufacturer 48 may be inputted through the survey sheet inputting means 46, whereby the survey sheets of a plurality of products may be accumulated. Then, when a purchaser 49 makes a disclosure request for a product, the survey sheet 43 for the product may be outputted through the survey result outputting means 47.

In general, the survey of a product using a large number of substances requires the knowledge of chemistry and a large burden. However, in the present embodiment, considerable efforts have been directed in accurate survey of the substances used in a product. As a result, attention is focused on the fact that the substances used in a product are not completely arbitrarily used, and that products relevant to their substances requiring care at the survey of the product information, to an extent. This has resulted in the invention. More specifically, for each product, a group of substances highly relevant to the product is searched for in a database prepared in advance. The information is attached to the survey request, whereby care is prompted to the manufacturer conducting the survey.

A feature of the present embodiment is that care is prompted not with a general message such as "Please be careful about missing input", but with a detailed instruction in which relevant substances (at-survey care target substances) requiring care are specified depending on the product. Further, in the present embodiment, the relevant information database 45 is used, whereby at-survey care target substances are specified for each product. Thus, the at-survey care target substances are specified more appropriately. Accordingly, even a purchaser not having specialized knowledge on the product and the component substances can prepare an appropriate survey sheet 43, and further provide useful care prompting information to be used when the manufacturer prepares the survey sheet. Further, the priority in the survey is specified clearly, whereby the labor for the survey can be distributed appropriately.

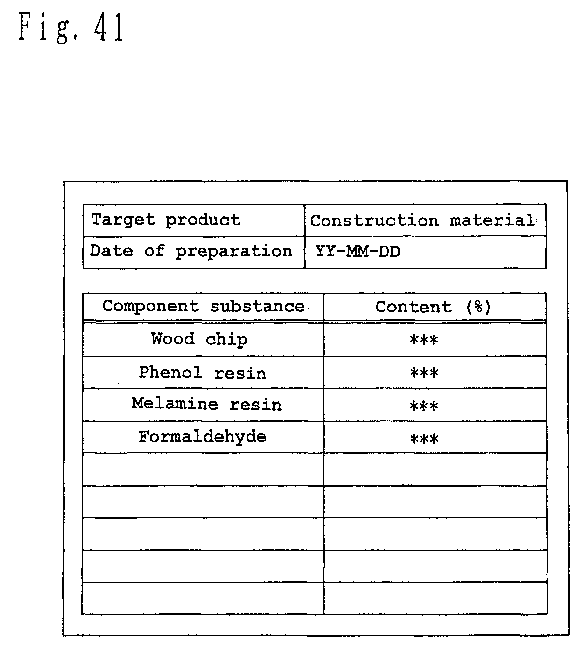

In addition to the inputting of the names and the contents of the component substances, the data inputted through the survey sheet 42 may include the date of data generation, the article number and the name of the survey target product, the name of the manufacturer, the name of the provider, the material safety data sheet (MSDS) number, and the purpose of usage (such as packaging, washing, and electronic components), and the like. An example of the survey sheet 43 is shown in Figure 41. The form of the survey sheet 43 may be electronic information, or alternatively, information recorded in a substance medium such as a paper sheet, and is not limited specifically. However, from the viewpoint of easy handling of the data, it is preferable that the survey sheet is in the form of electronic information.

The relevant substance according to the present embodiment is not limited specifically as long as the substance is relevant to a product. The relevant substance is selected with considering the purpose, the importance, and the like in the survey. For example, hazardous substances relevant to a product may be selected solely as relevant substances. Alternatively, legislative control target substances with respect to the product may be set as relevant substances.

The relevant information database 45 according to the present embodiment stores at least the names of the relevant substances corresponding to a product.

The combinations between a product and relevant substances used in the relevant information database according to the present embodiment are those between substances used generally in combination. The product and the relevant substance may be set appropriately depending on the purpose of the survey. In particular, in comparison with the major component substances used in the product, the inputting of additives and processing agents is missed frequently because of the small quantities in the contents. Accordingly, these substances need to be considered are preferably registered as relevant substances without omission.

For example, self-imposed control target substances prescribed in a company or an industry and legislative control target substances may be set as relevant substances. The combinations between a product and relevant substances include: polyvinyl chloride / various phthalic acid plasticizers; bromine flame retardant / antimony trioxide; stainless steel / chromium, nickel, or manganese; semiconductor material / arsenic; and other various combinations depending on the purpose of survey. For example, when accurate content data is necessary with respect to bromine flame retardants in a resin, various resins are set as products, while the kinds of bromine flame retardants to be considered are set as relevant substances.

Other examples include: electric product / lead, mercury, cadmium, chromium (VI) , poly-biphenylbromide, and poly-diphenyl ether bromide; and construction material / formaldehyde and toluene. Further examples include: steel material / chromium; plated component / nickel; surface finished steel plate / chromium; paste / cadmium; anticorrosive / chromium(VI) ; paint / zinc oxide; switch / cadmium; ceramic / lead titanate; and electrode relevant component / indium.

Further, in the combinations between a product and relevant substances in the relevant information database according to the present invention, a substance non-intentionally contained in the product may be set as a relevant substance, for example, in a case that another compound is generated due to a chemical reaction during the fabrication of a product, or that un-reacted rawmaterial during the fabrication of a product remains in the product. An example of this is the case that the product contains polystyrene, and that the relevant substances are styrene monomer, styrene dimmer, and the like. Another example is the case that the check target substance is phenol-formaldehyde resin, and that the relevant substance is un-reacted formaldehyde.

The at-survey care target substance according to the present embodiment is obtained by extracting a relevant substance of a target product with referring to the relevant information database. In addition to the extracting from the relevant information database, the at-survey care target substance may be set to be the name of a substance in which the purchaser of the product desires high data accuracy in the survey.

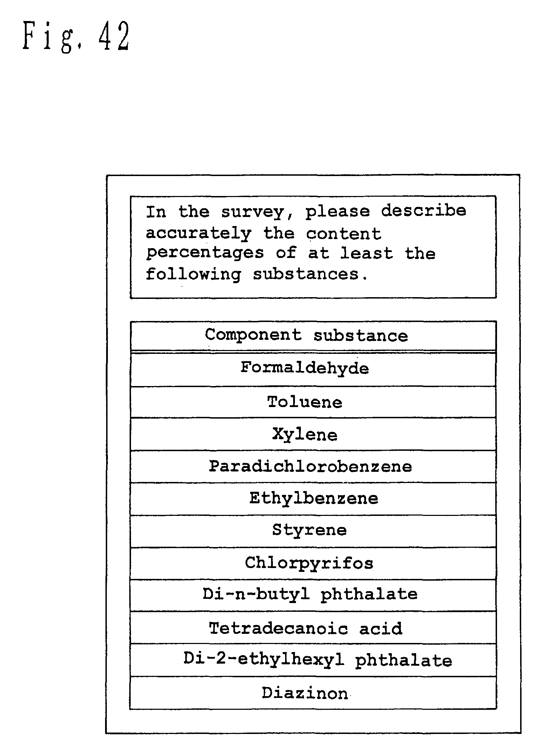

The at-survey care target substance list according to the present embodiment lists at-survey care target substances as shown in Figure 42. The form of the at-survey care target substance list may be electronic information, or alternatively, information recorded in a substance medium such as a paper sheet, and is not limited specifically. However, from the viewpoint of easy handling of the data, it is preferable that the list is in the form of electronic information.

### [Embodiment 15]

The configuration of a product information providing system according to Embodiment 15 of the invention is described below. In Embodiment 14, the at-survey care target substance list 44 has been attached to the survey sheet 43 outputted from the survey sheet outputting means 42. However, the present Embodiment 2 is different in the point that a column used for the contents of at-survey care target substances is attached to the survey sheet 43.

The configuration of Embodiment 15 is the same as that of Embodiment 15, and hence described below with reference to Figure 40. Further, the operation is described for different points solely. When the at-survey care target substance list 44 is prepared, a column used for the contents of at-survey care target substances is attached to the survey sheet 43. Then, the outputting means 42 requests the manufacturer 48 of the product for the disclosure of the product information. The manufacturer 48 having received the disclosure request fills in the sheet with the names of the component substances contained in the product and the contents of the component substances. At that time, the column used for the contents of at-survey care target substances is filled with carefully surveyed results, whereby the survey sheet 43 is completed. The filled-in survey sheet 43 is inputted through the survey sheet inputting means 46 to the product information providing system 41. After that, the survey sheet 43 is disclosed as the information of the product through the survey result outputting means 47 to the purchaser 49 of the product.

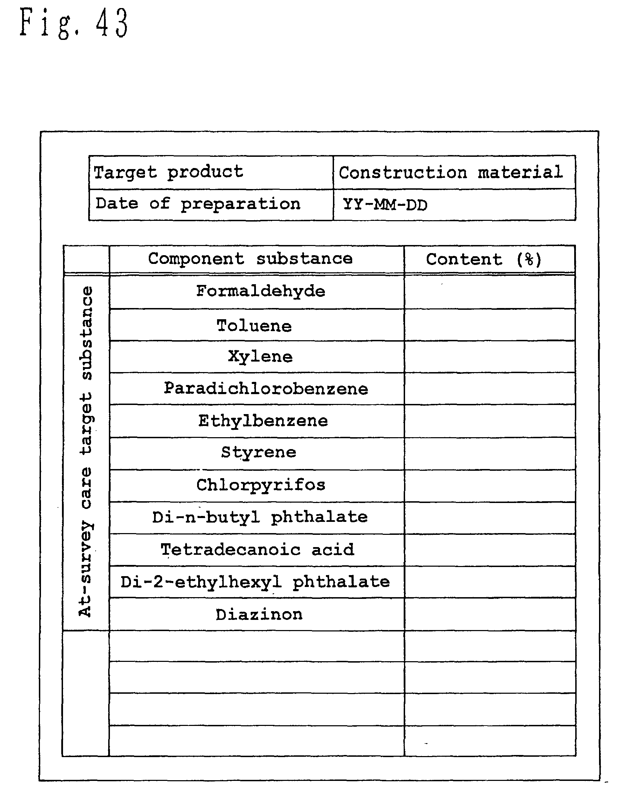

The column used for the contents of at-survey care target substances according to Embodiment 15 is attached, for example, in a form embedded in the survey sheet as shown in Figure 43. By virtue of such a form of attachment, in filling in the survey sheet, the contents of at-survey care target substances are inputted carefully. This reduces missing input and the like. The invention is not limited to the present embodiment in which the column used for the contents of at-survey care target substances is attached in a form embedded in the survey sheet. Thus, the column may be attached in the form of a separate sheet.

### [Embodiment 16]

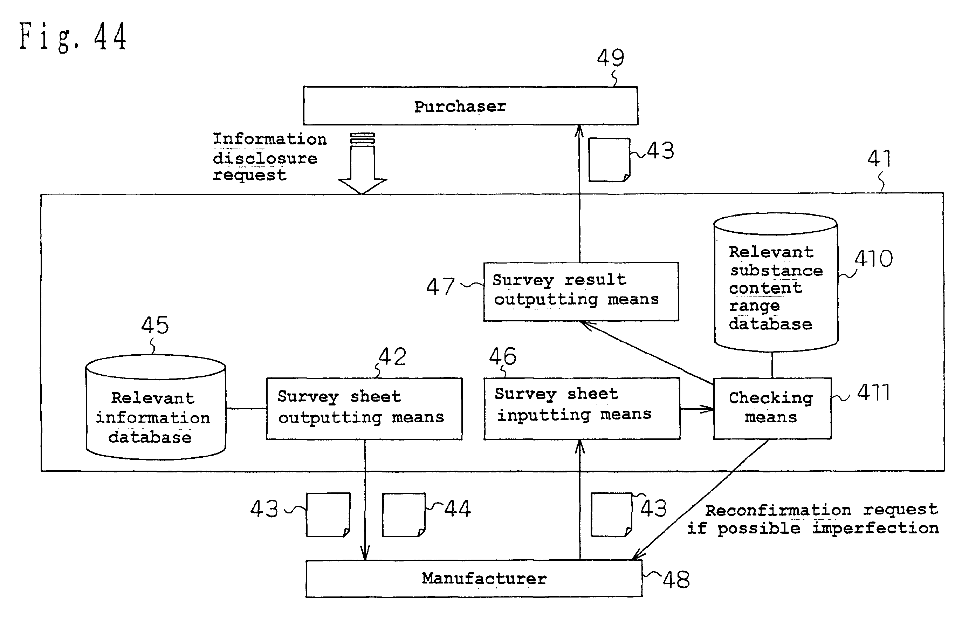

The configuration of a product information providing system according to Embodiment 16 of the invention is described below. As shown in Figure 44, the present embodiment is different from Embodiment 15 in the point that a relevant substance content range database 410 and checking means 411 are added.

The operation of Embodiment 16 is described below. Description of like points to Embodiment 14 is omitted, while different points solely are described. The survey sheet 43 filled in by the manufacturer 48 is inputted through the survey sheet inputting means 46 to the product information providing system 41.

Then, the checking means 411 compares the result of the content of an at-survey care target substance specified as a relevant substance in the survey sheet 43 replied from the manufacturer 48 of the product, with the value of the content range of the at-survey care target substance in the relevant substance content range database 410. When the result of the content of the at-survey care target substance in the survey sheet 43 falls outside the content range in the relevant substance content range database 410, reconfirmation of the content inputted in the column for the content of the relevant substance is requested to the manufacturer 48 of the product. In contrast, when the result of the content of the at-survey care target substance falls within the content range in the relevant substance content range database 410, the survey sheet 43 is disclosed to the purchaser 49 of the product as it is.

The relevant substance content range database 410 according to Embodiment 16 of the invention stores information on the range of the content percentage of the relevant substance of the product. The setting of the content range may be conducted using general literature data and the like. Alternatively, when the content percentage range is set on the basis of the names of the relevant substances relevant to the previously surveyed products and the contents of the relevant substances, a more practical content percentage range can be set advantageously.

According to the configuration of Embodiment 16 of the invention, the input result of the content is checked for the at-survey care target substance described in the survey sheet 43 obtained from the manufacturer 48 , by being compared with the content range in the relevant substance content range database 410. This permits the checking of missing input of the at-survey care target substance, as well as the checking of a possibility of input imperfection in the content percentage.

In Embodiments 15 and 16, when the at-survey care target substance is not contained in the product, the column for the content of the at-survey care target substance is filled with "zero" or remains blank. This result is common to both of the case that the substance is not contained actually and the case that input imperfection has occurred. Thus, these two cases cannot be discriminated. Accordingly, from the viewpoint of operation, it is preferable that a predetermined input item (such as "not contained") is inputted in order to discriminate these two cases.

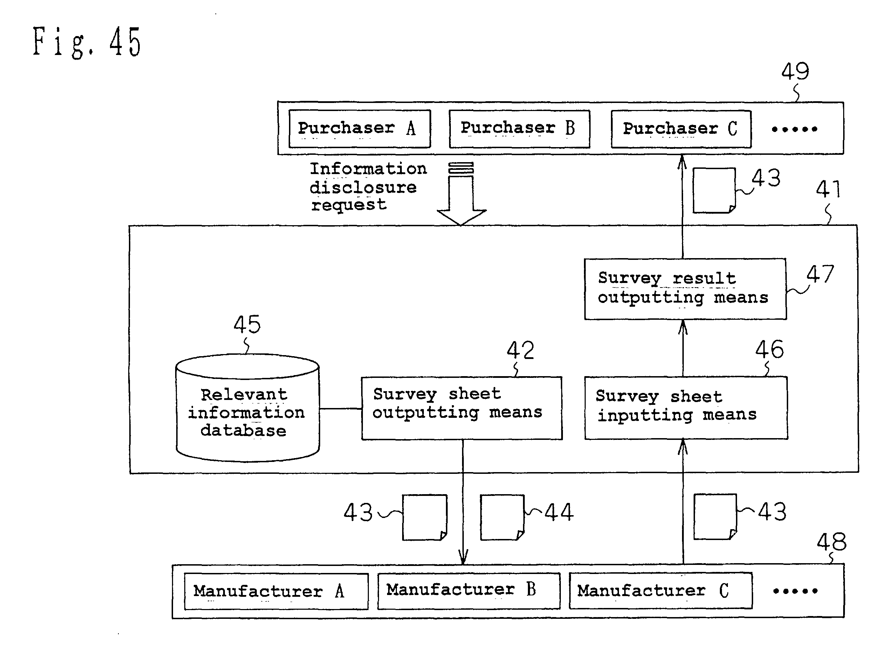

The product information system according to the present embodiment may be owned by the manufacturer 48 of the product or by the purchaser 49 of the product. Further, the invention includes the case that a person other than the manufacturer and the purchaser owns the system. In particular, in the product information providing system according to the present embodiment, a plurality of purchasers and manufacturers of the products are connected through a network as shown in Figure 45. Thus, a larger amount of product information can be treated advantageously. For example, in such a configuration, the relevant substance content range database described in Embodiment 16 can accumulate a larger amount of information on the names of the relevant substances relevant to the previously surveyed products and the contents of the relevant substances. This permits more accurate settingof the content range. Further, such a configuration permits the purchaser to browse the purchase target products of a larger number of manufacturers. Such information is useful in determining the purchase of the product.

### [Examples]

### [Example 8]

As for a specific construction material having been assigned as the product, the purchaser 49 made a disclosure request to the product information providing system 41 for the information on the amounts of materials and chemical substances contained in the product, whereby the product name was inputted.

The product information providing system 41 referred to the relevant information database 410, and thereby extracted the names of relevant substances relevant to the construction material. These were formaldehyde, toluene, xylene, paradichlorobenzene, ethylbenzene, styrene, chlorpyrifos, di-n-butyl phthalate, tetradecanoic acid, di-2-ethylhexyl phthalate, and diazinon, which were specified in the guideline for indoor contamination air prescribed by the public agency. When the product information providing system 41 outputs a survey sheet 43 to the manufacturer 48 of the target construction material, add was a remark "Please specify the survey result of at least formaldehyde, toluene, xylene, paradichlorobenzene, ethylbenzene, styrene, chlorpyrifos, di-n-butyl phthalate, tetradecanoic acid, di-2-ethylhexyl phthalate, and diazinon".

Then, the manufacturer 48 made a careful survey on the contents especially of formaldehyde, toluene, xylene, paradichlorobenzene, ethylbenzene, styrene, chlorpyrifos, di-n-butyl phthalate, tetradecanoic acid, di-2-ethylhexyl phthalate, and diazinon, and thereby inputted the survey sheet 43 through the survey sheet inputting means 46 to the product information providing system 41.

Then, the product information providing system 41 outputted the survey sheet 43 filled with the survey result through the survey result outputting means 47 to the purchaser 49 having made the request.

### [Example 9]

As for a specific construction material having been assigned as the product, the purchaser 49 made a disclosure request to the product information providing system 41 for the information on the amounts of materials and chemical substances contained in the product, whereby the request was inputted as an information of the constructionmaterial. By product information providing system, an investigation of the amount of the materials or chemical substaces contained in the construction material as the product is performed. In the survey, on the basis of the information "construction material", the product information providing system referred to the relevant information database 45, and thereby extracted the names of relevant substances relevant to the construction material. These were formaldehyde, toluene, xylene, paradichlorobenzene, ethylbenzene, styrene, chlorpyrifos, di-n-butyl phthalate, tetradecanoic acid, di-2-ethylhexyl phthalate, and diazinon, which were specified in the guideline for indoor contamination air prescribed by the public agency. Then, a survey sheet 43 which listed in advance the names of the extracted relevant substances in the columns for the substance names and the contents in the product was issued, whereby the survey was requested to relevant manufacturers through the survey sheet outputting means 42.

Then, with filling in the columns in the survey sheet 43 with the names and the contents of the component substances contained in the product, each manufacturer 48 made a careful survey especially on the in-advance listed substances of formaldehyde, toluene, xylene, paradichlorobenzene, ethylbenzene, styrene, chlorpyrifos, di-n-butyl phthalate, tetradecanoic acid, di-2-ethylhexyl phthalate, and diazinon, and thereby filled in the column with the contents.

Then, each manufacturer inputted the survey sheet 43 filled with the result through the survey sheet inputting means 46 to the product information providing system 41. As a result, a database of the construction materials of a plurality of manufacturers had been constructed (this database is not shown in Figures 40, 44, and 45).

On the other hand, in order to obtain information used for selecting a construction material, the purchaser of the construction material made a request to the product information providing system 41 for the disclosure of a series of data on the contents of materials and chemical substances in the construction materials. From the database of the construction materials having been prepared already, the product information providing system 41 disclosed a series of information to the purchaser 49 through the survey result outputting means 47.

### [Example 10]

The purchaser 49 made a survey of the amount of materials and chemical substances contained in the printed circuit board having been assigned as the product, with respect to a plurality of manufacturers of printed circuit boards. In the survey, the product information providing system 41 was used, and the information "printed circuit board" was inputted. The product information providing system 41 referred to the relevant information database 45, and thereby extracted the names of relevant substances relevant to the printed circuit board. These were lead, mercury, cadmium, chromium (VI), poly-biphenyl bromide, and poly-diphenyl ether bromide, which were specified as control targets relevant to disposed electronic and electric devices in foreign countries. Then, a survey sheet 43 which listed in advance the names of the extracted relevant substances in the columns for the substance names and the contents in the product was issued, whereby the survey was requested to relevant manufacturers through the survey sheet outputting means 42.

Then, with filling in the columns in the survey sheet 43 with the names and the contents of the component substances contained in the product, each manufacturer made a careful survey especially on the in-advance listed substances of lead, mercury, cadmium, chromium(VI), poly-biphenyl bromide, and poly-diphenyl ether bromide, and thereby filled in the column with the contents.

Then, each manufacturer inputted the survey sheet 43 filled with the result through the survey sheet inputting means 46 to the product information providing system 41. The checking means 411 in the product information providing system 41 searched the relevant substance content range database 410. On the basis of the information on the names of the relevant substances relevant to the previously surveyed products and the contents of the relevant substances, the content ranges for lead, mercury, cadmium, chromium (VI), poly-biphenyl bromide, and poly-diphenyl ether bromide were set to be 0%, 0%, 0%, 0%, 0-10%, and 0-10%, respectively. On the basis of these values of content ranges, the checking means checked the contents of lead, mercury, cadmium, chromium(VI), poly-biphenyl bromide, and poly-diphenyl ether bromide in the survey sheet 43 inputted from the manufacturer.

As a result, a predetermined symbol "not contained" used when the target substance is not contained had been inputted in each of the survey results of lead, mercury, cadmium, chromium(VI), and poly-biphenyl bromide. This indicated "within the content rage". However, the survey result of poly-diphenyl ether bromide was 50% and outside the content range. Thus, reconfirmation of the content of poly-diphenyl ether bromide was requested to the manufacturer.

As a result, it was found that the reason was input imperfection in the manufacturer. Thus, the content was corrected, and then the survey sheet 43 was inputted again through the survey sheet inputting means to the product information providing system 41. When the checking means 411 checked the inputted survey sheet again, all items were within the content rages. Thus, the product information providing system 41 outputted the survey sheet 43 filled with the survey result, through the survey result outputting means 47 to the purchaser 49.

In Embodiments 14-16, the relevant information database 45 and the relevant substance content range database 410 correspond to a product substance information database according to the invention. The means with which the purchaser 49 makes an information disclosure request corresponds to inputting means according to the invention. The survey sheet outputting means 42 corresponds to searching means, survey sheet preparing means, and survey sheet outputting means 42 according to the invention. The checking means 411 corresponds to judging means according to the invention. The name of a product is an example of product information, while the name of a product and the name of a relevant substance correspond to product relevant information according to the invention.

The product survey system 41 corresponds to a product survey support apparatus according to the invention. Here, the invention may be implemented in the configuration that the at-survey care target substance list 44 or the survey sheet 43 is prepared solely. This configuration corresponds to a product relevant substance information providing apparatus according to the invention. The input terminal and the reply terminal are implementedby a computer, a PDA, or the like used in the manufacturer according to the above-mentioned embodiments.

Substances (referred to as component substances, in the embodiments) contained in a product according to the inventionmaybe all the substances constitutingtheproduct. However, the parts and the component substances of the product may be restricted when necessary, whereby the restricted portion solely may be considered as the component substances. For example, those having large environmental burden or those having a content percentage not below 1% relative to the overall weight of the product may be selected from the substances contained in the product, as the targets.

The name of a substance may be a substance name or a brand name, and is not limited specifically as long as the substances contained in the product can be clearly discriminated from each other. In the invention, in the inputting and setting of the product substance information, a general material name (such as surface finished steel plate) may be inputted in place of a substance name (such as iron). Further, in the inputting of a substance name, a material classification item (such as, metal, resin, and ceramic) to which the substance belongs may be added. The content of each substance according to the invention may be expressed by the mass (or weight) of the substance contained in one unit of the product, or alternatively by the total weight of one unit of the product and the mass (or weight) content percentage of the component substance. One unit of a product may be set arbitrarily depending on the form of package. For example, twelve products may be set to be one unit of the product. The content according to the invention may be expressed in terms of volume, area, or length, and is not limited specifically as long as the value is a physical quantity corresponding to the mass or weight of the substance.

The invention may be a program which causes a computer to execute the operation of all or part of the processes (or processes, operations, effects, and the like) in the product survey method, the information setting check method, product relevant substance information providing method, and the product survey support method according to the invention, and which works in cooperation with the computer.

The invention may be a medium carrying a program for causing a computer to execute all or part of the operation of all or part of the processes in the product survey method, the information setting check method, product relevant substance information providing method, and the product survey support method according to the invention, wherein: the medium is computer readable; and the read-out program works in cooperation with the computer.

Part of the processes (or steps, operations, effects, and the like) according the invention indicates a process or processes among a plurality of the processes, or alternatively, part of function or part of operation in a process.

Part of the apparatuses (or devices, circuits, sections, and the like) according the invention indicates: an apparatus or apparatuses among a plurality of the apparatuses; part of means (or devices, circuits, sections, and the like) in an apparatus; or alternatively, part of function in a piece of means.

The scope of the invention includes also a computer-readable recording medium in which a program according to the invention is recorded.

A mode of use of a program according to the invention may be that the program is recorded in a computer-readable recording medium and works in cooperation with a computer.

A mode of use of a program according to the invention may be that the program is transmitted through a transmitting medium, read out by a computer, and works in cooperation with the computer.

Data structure according to the invention includes a database, a data format, a data table, a data list, and a data type.

The scope of recording media according to the invention includes a ROM and the like, while the scope of transmitting media according to the invention includes a transmitting mechanism such as the Internet, and includes light, radio waves, acoustic waves, and the like.

A computer according to the invention is not restricted to genuine hardware such as a CPU, and may be firmware, an OS, and a peripheral device.

As described above, a configuration according to the invention may be implemented by software or hardware.

### INDUSTRIAL APPLICABILITY

As described above, according to the invention, survey target substances are extracted finally by the purchaser from the data disclosed by the manufacturer. Accordingly, the manufacturer may disclose content data which lists all recognizable substances contained in the product, to all purchasers each desiring distinct target substances. Even in this case, each purchaser can process the data easily. This reduces the burden to the manufacturer in the data disclosure. Further, even when the component substances necessary in the product survey are changed in the purchaser , this change can be treated easily by changing the survey target substance master.

Further, the evaluation result of the environmental burden of the products belonging to a classification target among the product classifications desired by the purchaser is outputted to the purchaser as a whole. Accordingly, the purchaser can use the evaluation result as a criterion for determining a product to be purchased by oneself.

In the invention, in response to an input of a substance used in a product, a substance group highly relevant to the substance is outputted. Accordingly, even a person not having specialized knowledge on chemical substances can support accurate inputting in the material survey. Further, in the invention, whether a substance group highly relevant to a substance used in the product is inputted within the content data is searched and displayed. When the relevant substance group is not inputted, it is outputted that the inputting of a substance within the substance group could have been missed. This permits checking of a possibility of imperfection in the inputting of the substances used in the product. Accordingly, even in case of a person not having specialized knowledge on chemical substances, input imperfection is suppressed in the material survey. Further, on the side who receives the result of the material survey, even a person not having specialized knowledge on chemical substances can check the result accurately.

Further, in the invention, when a survey is requested to a manufacturer, relevant substances (at-survey care target substances) requiring care are specifically identified depending on the product. This reduces the labor in preparing the survey.

## Claims

1. A product survey system comprising:
a product substance information database which stores product substance information including at least product specification information for specifying a predetermined product, the names of substances contained in said products, and the contents of said substances;
product substance information inputting means which inputs said product substance information to said product substance information database; and
searching means which, on the basis of a setting of said product specification information of a product and the name of a substance which serve as survey targets, searches said product specification information of said product and the name of a substance which serve as survey targets, from said product substance information database.

2. The product survey system according to Claim 1, comprising survey target setting means of performing said setting.

3. The product survey system according to Claim 1 or 2, wherein:
said product includes a plurality of sub-products;
in said product substance information database, said product substance information is stored on a said-sub-product basis; and
said product substance information of said product is expressed as an aggregation result of said product substance information of said sub-products constituting the product.

4. The product survey system according to Claim 3, wherein:
in said product substance information database, said product substance information is managed as product classifications on the basis of the type of said product; and
said survey target settingmeans performs said setting on a said-product-classification basis, while said searching means searches on a said-product-classification basis.

5. The product survey system according to Claim 4, wherein:
a survey target exclusion substance relevant to predetermined said product classification is set; and
in the operation of said setting of said survey target setting means, a substance set as said survey target exclusion substance is discriminated from said survey targets, while the product substance information thereof is obtained.

6. The product survey system according to Claim 1 or 2, comprising:
disclosure condition setting means of setting a predetermined disclosure condition; and
restricted outputting means of restricting the subject matter of said search result on the basis of said disclosure condition, and outputting it to the outside.

7. The product survey system according to Claim 6, wherein:
said disclosure condition relates to a provider who provides said product substance information; and
said restricted outputting means performs said restriction on the basis of a permission of said provider.

8. The product survey system according to Claim 6, wherein:
said disclosure condition relates to the usage charge of said survey target setting means;
said restricted outputting means performs said restriction on the basis of the level of said charge.

9. The product survey system according to Claim 1 or 2, wherein a product substance information setting means comprising input supporting means which, on receiving an input of a part of characters of the name of said substance, displays a substance name list including said characters, and which receives selectively an input of a specific substance name within said displayed substance name list.

10. The product survey system according to Claim 1, wherein said product substance information is managed using a substance code assigned to the name of the substance of said substances specification information.

11. The product survey system according to any one of Claims 1-9, comprising environmental burden evaluating means which, on the basis of said product substance information of said product serving as a survey target, evaluates the environmental burden of a desired product serving as said survey target.

12. An information-setting check apparatus comprising:
product substance information setting means which sets product substance information including at least product specification information for specifying a predetermined product and the names of substances contained in said products;
a relevant substance information database which stores substances relevance information including at least the names of products and/or substances highly relevant to each other based on a predetermined criterion;
checking means which, with referring to said relevant substance information database, checks whether a relevant substance related by said substances relevance information is included in the product specification information or the substances of said product substance information set by said substance information setting means; and
outputting means which, when said correspondence is found, outputs relevant substance information including at least the name of said relevant substance.

13. The information-setting check apparatus according to Claim 12, wherein said product substance information includes the content of said substance.

14. The information-setting check apparatus according to Claim 12 or 13, wherein when the name of said relevant substance is not included in said product substance information,said outputtingmeans outputs said substances relevance information.

15. The information-setting check apparatus according to Claim 12 or 13, wherein said substances relevance information includes the names of use relevant to the substances of said product substance information.

16. The information-setting check apparatus according to Claim 12 or 13, wherein said predetermined criterion is defined on the basis of the relevance with said predetermined product.

17. The information-setting check apparatus according to Claim 15, wherein in the case that the content percentage of the substance of said product substance information relative to said product is not below a predetermined value, said outputting means outputs said substances relevance information.

18. The information-setting check apparatus according to Claim 12 or 13, further comprising aggregating means of aggregating the number of said substances relevance information for each of said predetermined products,
wherein
among said aggregated combinations, said outputting means outputs combinations having a number not below a predetermined number, as said relevant substance information.

19. The information-setting check apparatus according to Claim 12 or 13, wherein said substances relevance information includes the content percentage range of said relevant substance in the substance of said product substance information.

20. The information-setting check apparatus according to Claim 19, further comprising judging means of judging whether a content percentage of said substance included in said substance information falls within said content percentage range of said substances relevance information, wherein
said outputting means outputs the judgment result of said judging means together with said substances relevance information.

21. A product relevant substance information providing apparatus comprising:
a product-substance information database which stores product relevant substance information including respective product information of various products and product relevant substance information containing at last the names of product relevant substances selected from said product information of various products on the basis of a predetermined criterion;
inputting means which receives an input of said product information of a product serving as a survey target; and
searching means which searches said product relevant substance information corresponding to said product information inputted through said inputting means, from said product-substance information database.

22. The product relevant substance information providing apparatus according to Claim 21, wherein said product-substance information database includes the content percentage range of said product relevant substance in said product, as content percentage information.

23. A product survey support apparatus comprising:
the product relevant information providing apparatus according to Claim 21 or 22;
survey sheet preparing means of preparing a predetermined survey sheet; and
outputting means of outputting at least said survey sheet; wherein
said survey sheet has subj ect matter that information including at least the content of a substance related to said product in said product is required.

24. The product survey support apparatus according to Claim 23, wherein said survey sheet includes the subject matter that at least the content of the substance of said product relevant substance information corresponding to said product information inputted through said inputting. means is included.

25. The product survey support apparatus according to Claim 23, further comprising judging means of judging whether the content percentage of said product relevant substance included in said substance information obtained from said survey sheet falls within the content percentage range of said content percentage information of said product relevant information.

26. A product survey system comprising:
the product survey support apparatus according to any one of Claims 23-25;
an input terminal which inputs said product information; and
a reply terminal which acquires said survey sheet and which comprises substance information preparing means of preparing said substance information on the basis of the survey sheet.

27. A product survey method comprising the processes of:
inputting product substance information into a product substance information database which stores product substance information including at least product specification information for specifying a predetermined product, the names of substances contained in said products, and the contents of said substances;
setting said product specification information of a product and the name of a substance which serve as survey targets; and
searching, on the basis of a setting, said product specification information of said product and the name of a substance which serve as survey targets, from saidproduct substance information database.

28. An information-setting check method comprising the processes of:
setting product substance information including at least product specification information for specifying a predetermined product and the names of substances contained in said products;
with referring to a relevant substance information database which stores substances relevance information including at least the names of substances highly relevant to each other based on a predetermined criterion, checking whether a relevant substance related by said substances relevance information is included in the substances of said product substance information set by said substance information setting means; and
when said correspondence is found, outputting relevant substance information including at least the name of said relevant substance.

29. A product relevant substance information providing method comprising the processes of:
using a product-substance information database which stores product relevant substance information including at least respective product information of various products and product relevant substance information containing at last the name of a substance selected from the substances contained respectively in the various products on the basis of a predetermined criterion;
receiving an input of said product information of a product serving as a survey target; and
searching said product relevant substance information corresponding to said product information inputted through said inputting means, from said product-substance information database.

30. A product survey support method comprising:
the processes of a product relevant information providing method according to Claim 29;
the process of preparing a predetermined survey sheet; and
the process of outputting at least said survey sheet;
wherein
said survey sheet has subj ect matter that information including at least the content of a substance related to said product in said product is required.

31. A computer program of causing a computer to execute all or part of the processes of: inputting product substance information into a product substance information database which stores product substance information including at least product specification information for specifying a predetermined product, the names of substances contained in said products, and the contents of said substances; setting said product specification information of a product and the name of a substance which serve as survey targets; and searching, on the basis of a setting, said product specification information of said product and the name of a substance which serve as survey targets, from said product substance information database; in a product survey method according to Claim 27.

32. A computer program of causing a computer to execute all or part of the processes of: setting product substance information including at least product specification information for specifying a predetermined product and the names of substances contained in said products; with referring to a substances relevance information database which stores relevant substance information including at least the names of substances highly relevant to each other based on a predetermined criterion, checking whether a relevant substance related by said substances relevance information is included in the substances of said product substance information set by said substance information setting means; and when said correspondence is found, outputting relevant substance information including at least the name of said relevant substance;in an information-setting check method according to Claim 28.

33. A computer program of causing a computer to execute all or part of the processes of: using a product-substance information database which stores product relevant substance information including at least respective product information of various products and product relevant substance information containing at last the name of a substance selected from the substances contained respectively in the various products on the basis of a predetermined criterion; receiving an input of said product information of a product serving as a survey target; and searching said product relevant substance information corresponding to said product information inputted through said inputting means, from said product-substance information database; in a product relevant substance information providing method according to Claim 29.

34. A computer program of causing a computer to execute all or part of the processes of: the process of preparing a predetermined survey sheet; and the process of outputting at least said survey sheet; in a product survey support method according to Claim 30.

35. Acomputer-processablemediumcarryingaprogram according to Claim 31.

36. A computer-processable medium carrying a program according to Claim 32.

37. Acomputer-processablemediumcarryingaprogram according to Claim 33.

38. Acomputer-processablemediumcarryingaprogram according to Claim 34.
